# EUROPEAN PATENT APPLICATION

(11) **EP 4 760 508 A1**
(43) Date of publication of application: **17.06.2026**
(21) Application number: 25222169.2
(22) Date of filing: 10.12.2025
(51) Int. Cl.: G06F 9/50, G06F 11/30, G06N 3/08

(54) **SYSTEMS AND METHODS FOR PROVIDING APPLICATION-LEVEL INSIGHT FOR DEVICES AND NETWORK ARRANGEMENTS WITH UNKNOWN SPECIFICATIONS**

(30) Priority: 13.12.2024 US 202418981130
(71) Applicant: Citibank, N.A., New York, NY 10013 (US)
(72) Inventor: HESS, Adam, New York, NY 10013 (US); ORCZYK, Dawid, New York, NY 10013 (US); WOJNAROWSKI, Dominik, New York, NY 10013 (US); ANDRZEJEWSKI, Krzysztof, New York, NY 10013 (US); CHRABONSZCZ, Pawel, New York, NY 10013 (US)
(74) Representative: Boult Wade Tennant LLP

(57) **Abstract**

Systems and methods for generating an application profile repository that comprises application profiles. These application profiles may indicate the likely processes executed by a given application as well as the usage metric signatures for those processes. Additionally, the application profiles may indicate the dependencies between applications. To overcome the technical issue of some application profiles being missing or incomplete, the application profile repository may comprise a first set of application profiles corresponding to applications with known dependencies and a second set of application profiles corresponding to applications with virtual dependencies. These virtual dependencies may be determined based on comparisons of the applications, their processes, device usage metrics while the processes are being executed, etc.

## Description

### CROSS-REFERENCE TO RELATED APPLICATION(S)

This application is a continuation-in-part of U.S. Patent Application No. 18/531,817, filed December 7, 2023, which is a continuation of U.S. Patent Application No. 18/361,658, filed July 28, 2023, now U.S. Patent No. 11,843,248, which is a continuation-in-part of U.S. Patent Application No. 18/157,781, filed January 20, 2023, now U.S. Patent No. 11,747,782. This application is also a continuation-in-part of U.S. Patent Application No. 18/361,198 filed on July 28, 2023, and a continuation-in-part of PCT/US23/61049 filed on January 20, 2023. The content of the foregoing applications is incorporated herein in its entirety by reference.

### BACKGROUND

Cloud computing is the delivery of various computing services-such as storage, processing power, networking, and software-over the internet, often referred to as "the cloud." Instead of owning and maintaining physical data centers or servers, users can access these resources on demand from a cloud provider, paying for what they use. This model allows businesses and individuals to avoid the costs and complexities of managing their own IT infrastructure while benefiting from flexibility, scalability, and accessibility. Cloud computing is typically divided into three main service models: Infrastructure as a Service (IaaS), where providers offer virtualized computing resources; Platform as a Service (PaaS), which provides a framework for developing and deploying applications; and Software as a Service (SaaS), where users can access software applications directly through the internet. These services empower users to work remotely, collaborate in real-time, and rapidly adapt to changing technological needs.

Cloud computing offers numerous benefits over conventional computing networks. One of its primary advantages is cost efficiency, as it eliminates the need for substantial upfront investments in hardware and infrastructure. Instead, users can access computing resources on a pay-as-you-go basis, scaling up or down depending on their needs. This flexibility also promotes scalability, allowing organizations to quickly adjust to changing demands without being constrained by physical hardware limitations. Cloud services enhance accessibility by providing access to data and applications from virtually any device with an internet connection, fostering remote work and collaboration.

Cloud computing, despite its many advantages, can have significant environmental impacts, particularly through increased carbon emissions and power consumption. These impacts primarily stem from the significant amounts of electricity required to operate massive data centers. Data centers run continuously to meet growing demands for data processing, storage, and networking, consuming energy to keep servers running while also relying on relatively high cost, energy intensive, and space-consuming infrastructure, such as cooling systems to prevent overheating. Many data centers are still powered by non-renewable energy sources, such as coal and natural gas, which contribute to greenhouse gas emissions. Furthermore, as more businesses and individuals rely on cloud-based services, the demand for data storage and computing power rises, leading to the construction of more data centers and thereby further increasing energy consumption and depleting natural resources. The overall growth of cloud computing continues to put pressure on global energy and other resources and contributes to environmental degradation.

### SUMMARY

Systems and methods are described herein for decreasing power consumption and resulting carbon emissions, particularly in cloud computing environments. The systems and methods described herein provide for these and other advantages by offering application-level insights for devices and network arrangements with unknown specifications. For example, these systems and methods may determine the most efficient subset of devices for serving the application and may determine an application's usage metrics based on available devices and/or a current network arrangement as well as recommend more efficient alternative devices and/or arrangements. The systems and methods may make these determinations by first determining what devices, and what usage metrics on those devices, correspond to a given application.

However, determining such application-level insights faces numerous technical challenges. First, determining the exact percentage of power consumed by a cloud computing component that is attributable to a specific application is challenging due to the complex and shared nature of cloud infrastructure. Cloud environments rely on virtualization and resource pooling, where multiple applications and services from various users share the same physical hardware, such as servers and storage systems. This sharing makes it difficult to isolate the energy consumption of one particular application, as resources like CPU, memory, and bandwidth are dynamically allocated based on demand. Additionally, cloud data centers are designed for efficiency, often distributing workloads across multiple servers or even geographic locations to optimize performance and balance energy use. As a result, power consumption is spread across numerous physical components, and the usage patterns of one application may influence or overlap with others. Furthermore, factors such as network traffic, data storage needs, and cooling systems also contribute to total power consumption, further complicating the task of attributing specific energy use to a single application. The highly interconnected and elastic nature of cloud services makes precise measurements of and relating to power consumption difficult without highly granular and transparent monitoring systems.

Second, even if some application-level insights are available due to highly granular and transparent monitoring systems, determining the true power consumption of a given application is further frustrated because the given application may depend on other applications to perform some of its processes. For example, a first application often relies on other applications to perform certain functions through a process known as application integration or through the use of APIs (Application Programming Interfaces). In modern software architectures, applications are rarely standalone; they are part of a larger ecosystem where different software components or services collaborate to provide comprehensive functionality. For example, an e-commerce application may rely on external payment processing systems, customer relationship management (CRM) tools, or inventory management applications to handle specific tasks. Instead of building these features from scratch, the first application can call upon these external services or applications to perform specialized functions, such as processing payments, retrieving customer data, or updating stock levels.

Accordingly, to determine the true power consumption and/or efficiency of devices serving an application, uses of the system and methods herein may involve a determination of both the usage metrics for a device that is serving a first application and the proportion of those usage metrics attributable to the application as well as this same type of information for devices that are serving a second application on which the first depends. While some of this type of information may be readily available for certain devices and certain applications, this type of information is generally not readily available for all devices and applications. Moreover, the dependency relationships between applications is also generally unknown in most systems.

To overcome these technical challenges, in the systems and methods herein, an application profile repository that comprises application profiles may be generated. These application profiles may indicate likely processes executed by a given application as well as usage metric signatures for those processes. Additionally, the application profiles may indicate dependencies between applications. To overcome the technical issue of some application profiles being missing or incomplete, the application profile repository may comprise a first set of application profiles corresponding to applications with known dependencies and a second set of application profiles corresponding to applications with virtual dependencies. These virtual dependencies may be determined based on comparisons of the applications, their processes, device usage metrics while the processes being executed, etc. That is, the systems and methods herein may involve the creation of digital twins for applications with unknown specifications and/or dependencies. Once the application profile repository is populated, these systems and methods may involve the generation of a network mapping of the applications being used, the dependencies between applications, the devices being used, and/or the proportion of use corresponding to each application.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" includes plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

FIG. 1 shows an illustrative diagram for a user interface related to power consumption predictions, in accordance with one or more embodiments.
FIGS. 2A-E show an illustrative diagram related to power consumption predictions, in accordance with one or more embodiments.
FIG. 3 shows illustrative components for a system used to generate power consumption predictions, in accordance with one or more embodiments.
FIG. 4 shows a flowchart of the steps involved in generating power consumption predictions, in accordance with one or more embodiments.
FIG. 5 shows a flowchart of the steps involved in generating recommendations for network arrangements, in accordance with one or more embodiments.
FIG. 6 shows a flowchart of the steps involved in determining applications being serviced by one or more devices, in accordance with one or more embodiments.
FIG. 7 shows a flowchart of the steps involved in generating recommendations for network arrangements, in accordance with one or more embodiments.
FIG. 8 shows a flowchart of the steps involved in populating an application profile repository, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

Artificial intelligence, including, but not limited to, machine learning, deep learning, etc. (referred to collectively herein as "artificial intelligence models," "machine learning models," or simply "models"), has excited the imaginations of both industry enthusiasts as well as the public at large. Broadly described, artificial intelligence refers to a wide-ranging branch of computer science concerned with building smart machines capable of performing tasks that typically require human intelligence. Key benefits of artificial intelligence are its ability to process data, find underlying patterns, and/or perform real-time determinations. Given these benefits, the imagined applications for this technology seem endless.

However, despite these benefits and despite the wide-ranging number of potential uses, practical implementations of artificial intelligence have been hindered by several technical problems. First, artificial intelligence typically relies on training a model to make predictions and/or perform functions. Such training requires large amounts of high-quality data through which historical patterns may be detected. Additionally, the process for obtaining this data and ensuring it is high quality is often complex and time consuming. These technical problems present an inherent problem with attempting to use an artificial intelligence-based solution in environments with limited or no available data.

Systems and methods described herein for novel uses and/or improvements to artificial intelligence applications in an environment with limited or no available data. In particular, systems and methods are described herein for recommending network arrangements for devices with non-homogenous or unknown specifications based on power consumption for selected applications. For example, most computer applications rely on complex processes and technically diverse network arrangements. These network arrangements feature numerous non-homogenous devices (e.g., devices with different hardware, configurations, software/operating systems, and/or other specifications). One of the features common to any computer equipment is its demand for the electrical energy required for its operation and the associated emission of carbon dioxide emitted into the atmosphere during the production of electricity. Along with growing environmental awareness and legal regulations, many entities are obligated to reduce carbon dioxide emissions. One of the many areas in which changes are expected is the information technology infrastructure, which is commonly indicated as an area generating high carbon emission values. In order to be able to make decisions in this regard, it is necessary to know the current electricity consumption and the associated carbon emission values for all components of the infrastructure.

However, this presents a severe technical challenge. For example, while it is possible to measure a current power consumption for a specific device (e.g., a single computer), a set of devices (a cabinet with several devices-in a server room "rack"), or entire dedicated areas (technical room, data center), it is difficult or even impossible to do so on the application level, particularly in complex network arrangements due to the number of variables that dynamically change and the number of devices with non-homogenous or unknown specifications. This technical challenge is further exacerbated in cloud computing and/or network computing arrangements, in which multiple devices may be used to serve different functions for the application.

The use of artificial intelligence models to detect and/or make predictions on these dynamically changing variables potentially offers a solution. However, the difficulty in adapting artificial intelligence models for this practical benefit faces several technical challenges, such as the lack of any available training data. Furthermore, what data is available is often incomplete. For example, while data on some standardized hardware and computer components may be available, many network arrangements involve custom or specialized hardware components. Furthermore, each application may use available hardware and computer components (whether standardized or not) in unique and random fashions.

Despite these technical challenges in adapting artificial intelligence models for this practical benefit, systems and methods are disclosed for determining power consumption predictions and/or usage metric requirements at an application-specific level, even within network arrangements that feature devices with non-homogenous or unknown specifications. The system and methods may then recommend network arrangements for these devices based on the power consumption predictions and/or usage metric requirements. The systems and methods overcome these technical challenges by generating, and training a model on, a device profile repository that includes device profiles that are based on known specifications (e.g., specifications provided by a manufacturer of standardized computer hardware) but also device profiles based on virtual specifications. For example, through the use of device profiles based on virtual specifications, the systems and methods generate a "digital twin" of devices having non-homogenous or unknown specifications. By using this digital twin, the system may complete an incomplete sets of training data and thus properly train the artificial intelligence model.

To generate the digital twin, the systems and methods may generate a network mapping of a computer network. The network mapping may indicate relationships between a plurality of devices in the computer network through the use of a series of interconnected nodes in which the nodes represent specific devices and the edges between nodes indicate the relationships. Furthermore, the network mapping may be populated with respective known specifications, wherein the respective known specifications are based on respective vendor information, respective model information, respective serial number information, or respective geographical location information. The system may then infer respective virtual specifications for any devices with non-homogenous or unknown specifications based on the relationships between the plurality of devices and the respective known specifications. By doing so, the system may generate the needed virtual specifications that "fill in the gaps" of the network mapping and allow for an artificial intelligence model to be properly trained to provide power consumption predictions at an application-specific level, even within network arrangements that feature devices with non-homogenous or unknown specifications.

Upon creation of the network mapping, the systems and methods may generate a recommendation for a network arrangement for an application based on the subset of devices that provides the lowest power consumption and/or meets one or more other usage metric requirements.

In some aspects, systems and methods for providing network arrangements for devices with non-homogenous or unknown specifications based on power consumption for selected applications are described. For example, the system may receive a first user request to generate a first network arrangement of a plurality of devices for a first application across a first network. The system may receive a first usage metric requirement for the first application, wherein the first usage metric requirement describes required metadata related to one or more processes performed by the first application. The system may determine, from the plurality of devices, a plurality of subsets of devices for serving the first application. The system may retrieve, from a device profile repository, respective device profiles corresponding to devices on the first network, wherein the device profile repository comprises a first set of device profiles corresponding to devices with known specifications and a second set of device profiles corresponding to devices with virtual specifications. The system may determine, using a first model, a first output, wherein the first model is trained to generate respective application-specific power consumption predictions for the plurality of subsets of devices based on inputted usage metric requirements and the respective device profiles. The system may select, from the plurality of subsets of devices, a first subset of devices for serving the first application based on the first output. The system may generate a recommendation for the first network arrangement based on the first subset of devices.

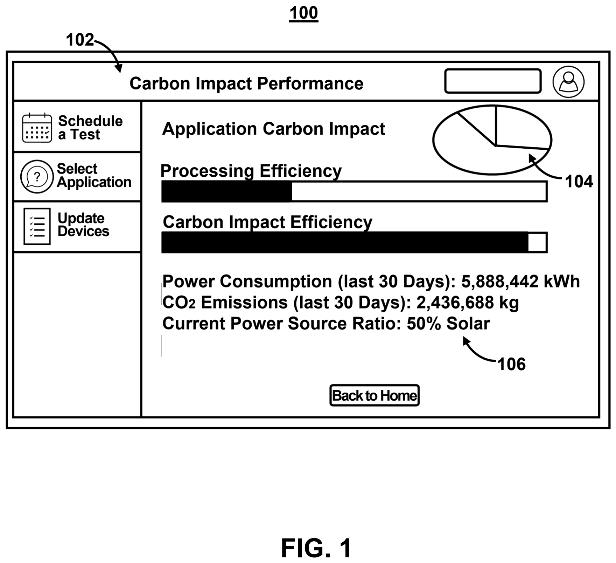

FIG. 1 shows an illustrative diagram for a user interface related to power consumption predictions, in accordance with one or more embodiments. For example, systems and methods are described herein for providing power consumption predictions for selected applications within network arrangements featuring devices with non-homogenous or unknown specifications. These predictions may be shown in user interface 100.

As referred to herein, a "user interface" may comprise a human-computer interaction and communication in a device and may include display screens, keyboards, a mouse, and the appearance of a desktop. For example, a user interface may comprise a way through which a user interacts with an application or a website. User interface 100 may present content. As referred to herein, "content" should be understood to mean an electronically consumable user asset, such as Internet content (e.g., streaming content, downloadable content, Webcasts, etc.), video clips, audio, content information, pictures, rotating images, documents, playlists, websites, articles, books, electronic books, blogs, advertisements, chat sessions, social media content, applications, games, and/or any other media or multimedia and/or combination of the same. In some embodiments, the content may relate to carbon impact. For example, content may include metrics 106.

In some embodiments, the system may identify a carbon impact (e.g., a carbon dioxide output, energy consumption, carbon footprint, and/or other emissions standard) of a business application within an enterprise datacenter infrastructure. By doing so, the system may recommend changes to the application's deployment in the future for a lower carbon impact. To do so, the system may collect various data points of the technology infrastructure items that make up the underlying environment for the application to run on. The system may determine metrics such as capacity, utilization, power consumption, location, usage, application assignment within the enterprise, etc. In addition, the system may gather metrics from the datacenter itself, such as power feeds, the type of power production for those feeds, locations, and the generally accepted carbon offset to the power at a specific rate in those locations based on the feed source.

The system may determine power consumption predictions, which may comprise a prediction based on a past, current, and/or future time period. Furthermore, the power consumption prediction may be expressed in terms of a carbon impact. As referred to herein, a "carbon impact" may comprise a quantitative or qualitative measure based on carbon dioxide output, energy consumption, carbon footprint, and/or other emissions standard such as global emissions factors (e.g., emission factors in grams CO₂e per kilowatt-hour). For example, the system may determine a carbon impact based on the total greenhouse gas (GHG) emissions caused by an individual, event, organization, service, place, or product expressed as a carbon dioxide equivalent (CO₂). GHGs, including the carbon-containing gases, carbon dioxide, and methane can be emitted through the burning of fossil fuels, land clearance, and the production and consumption of food, manufactured goods, materials, wood, roads, buildings, transportation, and other services. The emission of these gases may be used to generate electricity (e.g., electricity used to power electronic devices). The system may translate the amount of electricity used to power a device (or group of devices) servicing an application into a measure of the carbon impact.

In some embodiments, a power consumption prediction may comprise multidimensional data based on one or more factors. For example, while power consumption may, in some embodiments, be based on a single value (e.g., carbon impact), in some embodiments, power consumption may be based on a combination of factors, weights, and/or algorithms. For example, in some embodiments, power consumption may be further based on performance metrics and/or characteristics, which may be collected from devices. For example, using a combination of those factors, the system may determine a power consumption prediction that classifies devices and/or network arrangements in multiple dimensions (e.g., "efficiency 1: resource allocations vs. power consumption" and "efficiency 2: performance vs. power consumption").

For example, a power consumption prediction may be based on one or more performance metrics for a device and/or network. For example, performance metrics and/or characteristics for a device and/or network may comprise measurable attributes or indicators that determine its overall speed, efficiency, and capability to handle various tasks. These characteristics can vary depending on the specific components, configurations, and usage scenarios of the computer and include attributes such as processing power, memory capacity used, storage speed, graphics performance, network performance, input/output (I/O) performance, power efficiency, and/or other metrics (e.g., reliability, security, etc.). The processing power of a computer is typically measured by its CPU (Central Processing Unit) performance. Key factors include clock speed (measured in GHz), number of cores, and the efficiency of the architecture. Higher processing power enables faster execution of tasks and better multitasking capabilities. The amount of RAM (Random Access Memory) in a computer affects its ability to handle multiple applications and data simultaneously. More memory allows for smoother multitasking, faster data access, and better overall system performance. The speed and type of storage devices, such as solid-state drives (SSDs) or hard disk drives (HDDs), impact the computer's data access and transfer rates. Faster storage allows for quicker boot times, faster application loading, and improved file read/write operations. Graphics performance is especially important for tasks involving image rendering, video editing, gaming, or graphical simulations. Graphics processing units (GPUs) with higher processing power and dedicated video memory contribute to smoother graphics rendering and enhanced visual experiences. For network-intensive tasks or applications, network performance plays a crucial role. Network interface cards (NICs) and network adapters with higher bandwidth capabilities, such as Gigabit Ethernet or Wi-Fi standards, ensure faster data transfer rates and improved network responsiveness. I/O performance refers to the speed at which the computer can interact with peripheral devices like keyboards, mice, external storage, or USB devices. Faster I/O performance reduces latency and enhances the overall user experience.

In some embodiments, the system may use a power consumption prediction to determine a network arrangement. A network arrangement may refer to the design or configuration of network components and their interconnections. It defines how devices, systems, and infrastructure are organized to enable communication and data exchange within a computer network. Network arrangements can vary based on the size, purpose, and complexity of the network. In some embodiments, the network arrangement may also refer to the devices used to process an application, where applications (and their components) are stored through the processing routes used, the location of data stored, the technology stacks (and layer therein) used, and/or the data placement.

In another example, the network arrangement may relate to how data is processed and stored and/or network procedures. For example, the system may analyze duplicates of data in an environment and produce recommendations for better power consumption. For example, the system may determine that for the same data duplicated on different storage arrays, which cannot be deduplicated using built-in array mechanisms, the ideal network arrangement involves utilization of snapshots/clones instead of keeping many copies of the same data.

In some embodiments, the application-specific power consumption prediction may comprise a prediction related to a past, current, and/or future use of power. Additionally, or alternatively, the system may express the prediction in terms of carbon impact. For example, as shown in FIG. 1, user interface 100 may present carbon impact performance summary 102. User interface 100 may present content in numerous forms, such as textual or graphical data (e.g., graph 104). Additionally, or alternatively, the system may present quantitative or qualitative metrics related to the content. For example, as shown in user interface 100, the system may present current metrics on power consumption, carbon emissions, and/or power sources.

Each of the metrics may further be specific to a given application. For example, user interface 100 may generate information related to power consumption and/or carbon impact for a selected application. This information may be based on time-series data and presented in real time. As described herein, "time-series data" may include a sequence of data points that occur in successive order over some period of time. In some embodiments, time-series data may be contrasted with cross-sectional data, which captures a point in time. A time series can be taken on any variable that changes over time. The system may use a time series to track the variable (e.g., power consumption and/or carbon impact) over time. This can be tracked over the short term or the long term. The system may generate a time-series analysis. For example, a time-series analysis may be useful to see how a variable change over time. It can also be used to examine how the changes associated with the chosen data point compare to shifts in other variables over the same time period.

The time-series analysis may determine various trends, such as a secular trend, which describes the movement along the term, a seasonal variation, which represents seasonal changes, cyclical fluctuations, which correspond to periodical but not seasonal variations, and irregular variations, which are other nonrandom sources of variations of series. The system may maintain correlations for this data during modeling. In particular, the system may maintain correlations through non-normalization as normalizing data inherently changes the underlying data, which may render correlations, if any, undetectable and/or lead to the detection of false positive correlations. For example, modeling techniques (and the predictions generated by them), such as rarefying (e.g., resampling as if each sample has the same total counts), total sum scaling (e.g., dividing counts by the sequencing depth), and others, and the performance of some strongly parametric approaches depend heavily on the normalization choices. Thus, normalization may lead to lower model performance and more model errors. The use of a non-parametric bias test alleviates the need for normalization while still allowing the methods and systems to determine a respective proportion of error detections for each of the plurality of time-series data models.

As referred to herein, a "modeling error" or simply an "error" may correspond to an error in the performance of the model. For example, an error in a model may comprise an inaccurate or imprecise output or prediction for the model. This inaccuracy or imprecision may manifest as a false positive or a lack of detection of a certain event. These errors may occur in models corresponding to a particular sub-segment (e.g., a component model as described herein) that results in inaccuracies for predictions and/or output based on the sub-segment, and/or the errors may occur in models corresponding to an aggregation of multiple sub-segments (e.g., a composite model as described herein) that result in inaccuracies for predictions and/or outputs based on errors received in one or more of predictions of the plurality of sub-segments and/or an interpretation of the predictions of the plurality of sub-segments.

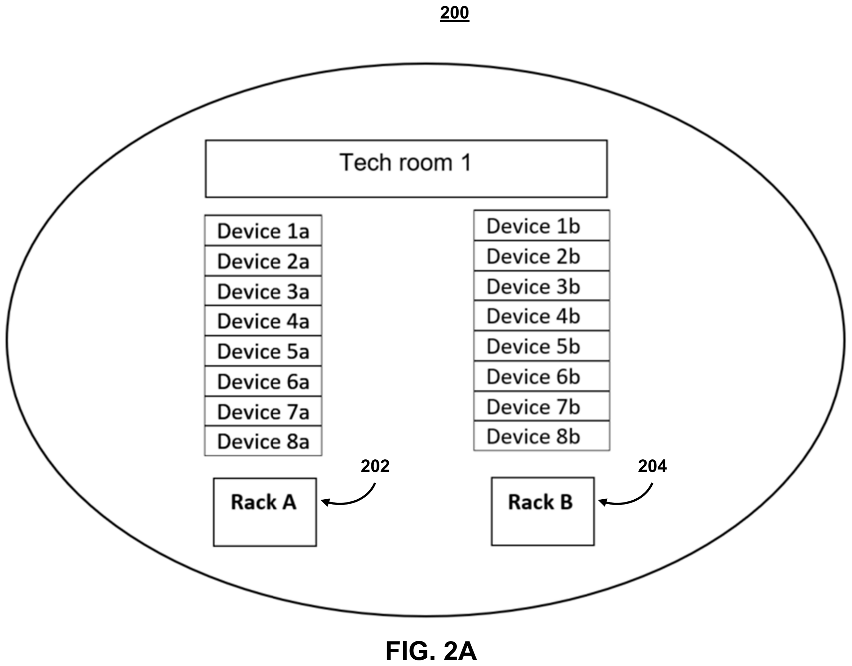

FIGS. 2A-D show an illustrative diagram related to power consumption predictions, in accordance with one or more embodiments. For example, FIG. 2A shows an illustrative diagram of a network (e.g., comprising a set of devices). For example, most computer applications rely on complex processes and technically diverse network arrangements. These network arrangements feature numerous non-homogenous devices (e.g., devices with different hardware, configurations, software/operating systems, and/or other specifications). One of the features common to any computer equipment is its demand for the electrical energy required for its operation and the associated emission of carbon dioxide emitted into the atmosphere during the production of electricity. Along with the growing environmental awareness and legal regulations, many entities are obligated to reduce carbon dioxide emissions. One of the many areas in which changes are expected is the information technology infrastructure, which is commonly indicated as an area generating high carbon emission values. In order to be able to make decisions in this regard, it is necessary to know the current electricity consumption and the associated carbon emission values for all components of the infrastructure.

However, this presents a severe technical challenge. For example, while it is possible to measure a current power consumption for a specific device (e.g., a single computer), a set of devices (a cabinet with several devices-in a server room "rack"), or entire dedicated areas (technical room, data center), it is difficult or even impossible to do so on the application level, particularly in complex network arrangements due to the number of variables that dynamically change and the number of devices with non-homogenous or unknown specifications. For example, diagram 200 may include rack 202 and rack 204. For example, diagram 200 may represent a technical room with two cabinets with equipment and eight devices in each of the cabinets.

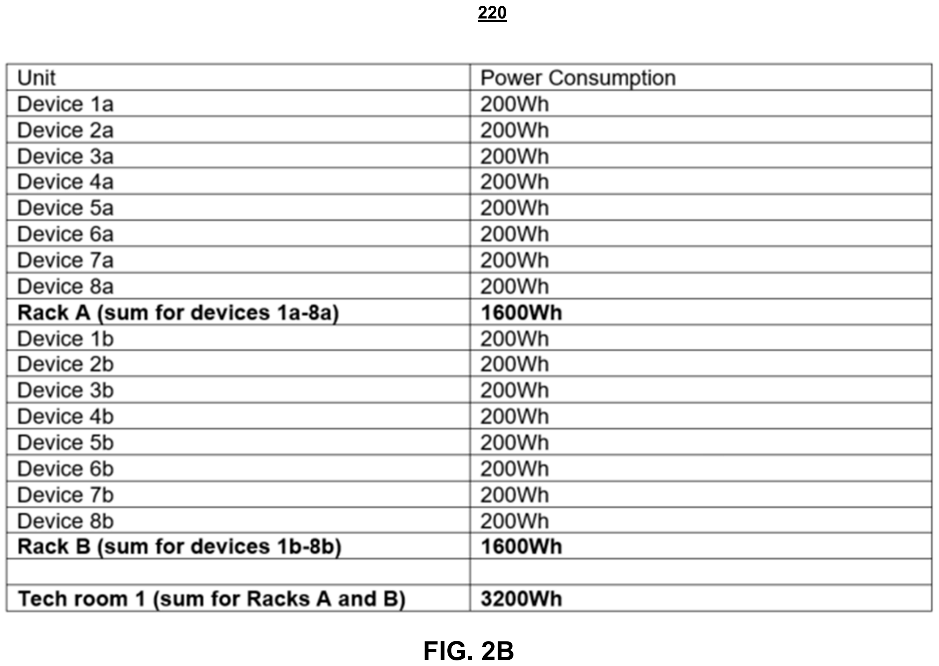

FIG. 2B shows an illustrative diagram of power consumption levels for the set of devices of FIG. 2A. For example, table 220 comprises examples of current power consumption values (e.g., usage metrics) that the system may obtain. As shown in table 220, although there are some usage metrics provided, the usage metrics are not sufficient to make informed decisions about reducing carbon impact for this environment. Furthermore, there is no conventional system for automatic mapping of business processes to the infrastructure used, no information on the percentage share of hardware usage for business processes-in particular for shared infrastructure (virtualization systems, storage systems, network devices, etc.)-a lack of detailed information on the efficiency of the use of equipment versus energy demand, and no information on the relationship between the energy demand and the amount of carbon emissions associated with the generation of electricity in each location/building.

As such, adapting artificial intelligence models for this practical benefit faces several technical challenges, such as the lack of any available training data. Furthermore, what data is available is often incomplete. For example, while data on some standardized hardware and computer components may be available, many network arrangements involve custom or specialized hardware components. Furthermore, each application may use available hardware and computer components (whether standardized or not) in unique and random fashions.

Despite these technical challenges in adapting artificial intelligence models for this practical benefit, systems and methods are disclosed for providing power consumption predictions at an application-specific level, even within network arrangements that feature devices with non-homogenous or unknown specifications. The systems and methods overcome these technical challenges by generating, and training a model on, a device profile repository that includes device profiles that are based on known specifications (e.g., specifications provided by a manufacturer of standardized computer hardware) but also device profiles based on virtual specifications. For example, through the use of device profiles based on virtual specifications, the systems and methods generate a digital twin of devices having non-homogenous or unknown specifications. By using this digital twin, the system may complete an incomplete sets of training data and thus properly train the artificial intelligence model.

For example, the system may collect various data points of the technology infrastructure items that make up the underlying environment for the application to run on. For example, the system may collect usage metrics, which may comprise metrics that describe the features, functions, capabilities, and/or other attributes of a specific device. The usage metrics may include capacity, utilization, power consumption, location, usage, application assignment within the enterprise, etc. In addition, the system may gather metrics for a network (or portion of a network) itself, such as power feeds, the type of power production for those feeds, locations, and/or the carbon offset to the power at a specific rate in those locations based on the feed source.

The system may use automated or manual data collectors to determine the current consumption data of devices, the type of devices, and/or other information about a network. As referred to herein, a "device profile" may comprise the set of attributes (services, capabilities, and/or features) associated with a particular device. The system may then generate a "known" device profile based on these "known" specifications. For example, the system map probes devices for information related to respective vendor information, respective model information, respective serial number information, or respective geographical location information. For example, a specification may comprise information and/or metadata related to hardware, software, protocols, and/or the connection medium of a device as well as the performance thereof.

In some embodiments, the system may detect gaps in the network mapping that correspond to nodes in the mapping (e.g., devices in the network) for which the specifications are not standardized and/or are otherwise unknown. In such cases, the system may generate a "virtual device profile," and the virtual device profile may comprise "virtual specifications." As referred to herein, a "virtual specification" refers to an operating performance specification for a network device that is not defined by an equipment vendor. For example, a virtual specification may be inferred based on monitoring and/or probing one or more devices connected to (and/or integrating with) another device. In some examples, the virtual specification may be based on similar devices and/or similar known specifications (e.g., as provided by a vendor of the device). In some embodiments, the virtual device profile may comprise a virtual representation of a given device and estimates of energy demand in accordance with a specific configuration and technical documentation.

In some embodiments, a device profile may be further defined into "device sub-profiles." Device sub-profiles may comprise a portion, segment, and/or other designation of one or more processes, components, and/or functions of a device. For example, in some embodiments, the system may perform calculations on "device profiles," which are calculated based on the resources allocated/consumed by a specific application. In such cases, the system may refer to a device sub-profile of a device profile that corresponds to a designated application.

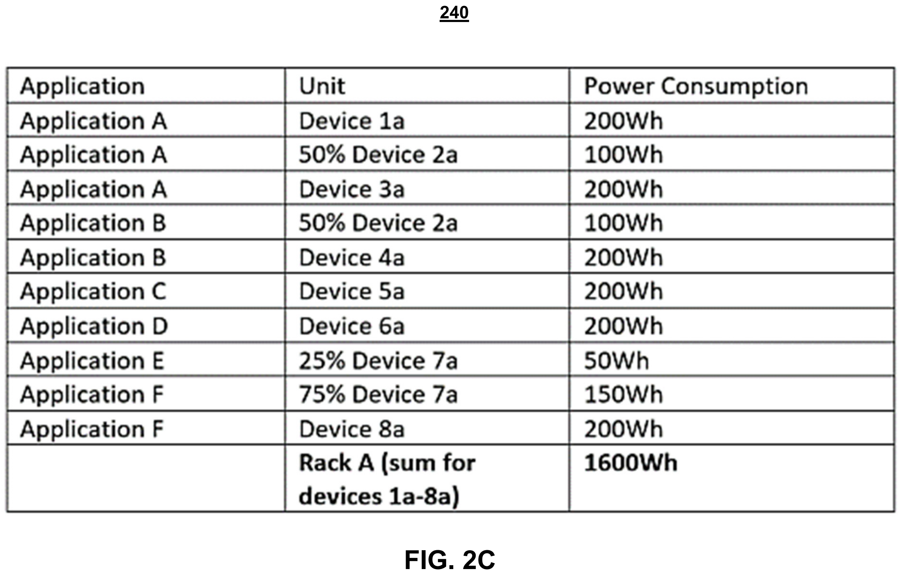

FIG. 2C shows an illustrative diagram of a network mapping for the set of devices of FIG. 2A. For example, as shown in table 240, the system may generate several types of information. As shown, each device is assigned to a specific application. This may be predetermined and/or determined dynamically based on use. The system may record and/or store this information in a central register of applications and/or a central register of devices, which may comprise a device profile repository.

As referred to herein, the device profile repository comprises a datastore or other memory comprising a plurality of device profiles. The device profiles may comprise both known device profiles as well as virtual device profiles. As a result, a list of devices with an assigned number and name of the device is produced. In the case of shared infrastructure, the percentage of resource utilization for each application may be calculated separately. In some embodiments, the exact specificity of the calculation depends on the type/purpose of the equipment. The system may also determine specific information based on a type of device (e.g., metrics for storage devices may comprise storage capacity utilized, metrics for network devices may comprise the number of ports used on switches in the physical and virtual layers (e.g., as a percentage of traffic in connections between switches)), and for virtualization tier servers, the metrics may comprise the number of virtual resources allocated, etc.

As shown in table 240, for the components, both from the perspective of the hardware itself and also from the perspective of the application, the system may calculate the efficiency of use. In some embodiments, the exact specificity of the calculation depends on the type/purpose of the equipment. The system may also determine specific information based on a type of device (e.g., for storage devices, the system may calculate logical amount of stored data versus power consumption (and logical amount of stored data versus carbon emissions); for network devices, the system may calculate the number of network ports used versus power consumption (and the number of network ports used versus carbon emissions); and for virtualization tier servers, the system may calculate the size of allocated virtual resources versus power consumption (and the size of allocated virtual resources versus carbon emissions)).

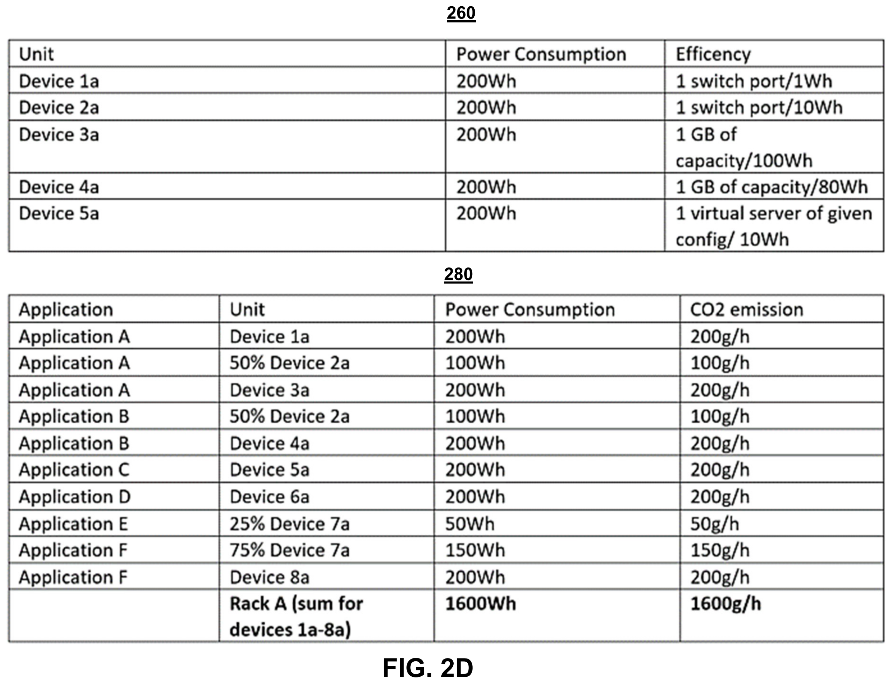

FIG. 2D shows an illustrative diagram of predicted efficiencies for the set of devices of FIG. 2A. For example, as shown in FIG. 2D, the system may calculate a power consumption and efficiency for each device (table 260) and/or application (table 280). The system may then, based on information on a power source of energy supply for each of the devices and/or information on the cost of electricity production expressed in carbon emissions, generate data for each device and/or each application.

For example, based on received metrics, the system calculates the carbon impact, based on power consumption, for the infrastructure components that the application utilizes. This is then combined with similar information within a dashboard (e.g., user interface 100 (FIG. 1)) for a visual representation and comparison of carbon impacts based on business, application-specific, technology-specific, location-specific, and other scenarios. The data, the impact scoring, and the viewpoints are all made available by the system to users for discussion, investigation, and/or decisioning on what changes should occur to adjust the carbon impact in a positive direction.

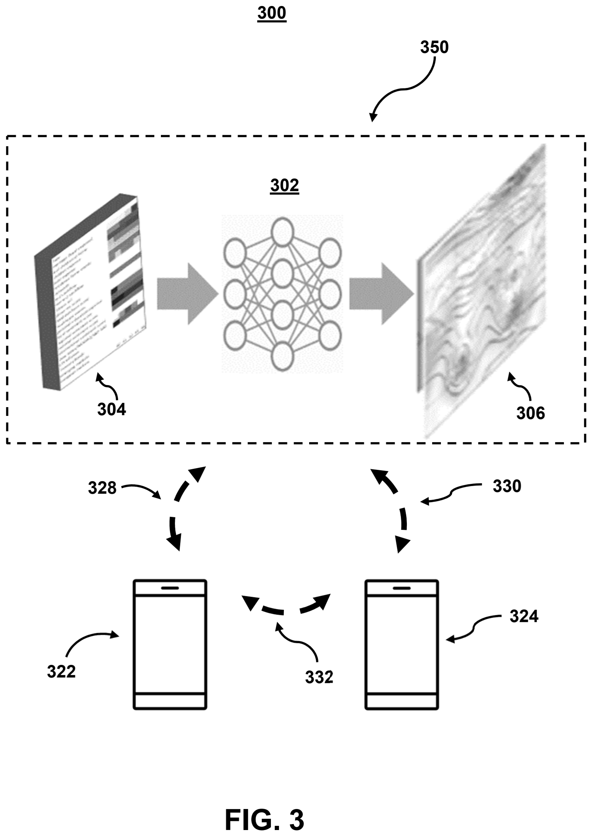

For example, as further described in FIG. 3, the system may use a model and/or algorithm that collects a list of devices (including vendor, model, type, serial number, name, geographical location), pulls device power consumption (or builds a digital twin if needed), pulls device utilization (e.g., total capacity, used capacity), calculates device efficiency (e.g., by comparing two figures: power consumption/total capacity versus power consumption/used capacity), collects a list of applications and/or their processes running on the device (e.g., based on an application identifier and server (client) name), calculates percentage of resources consumed by application/process on the device, and uses global emissions factors per location to calculate carbon emission values for the devices and applications.

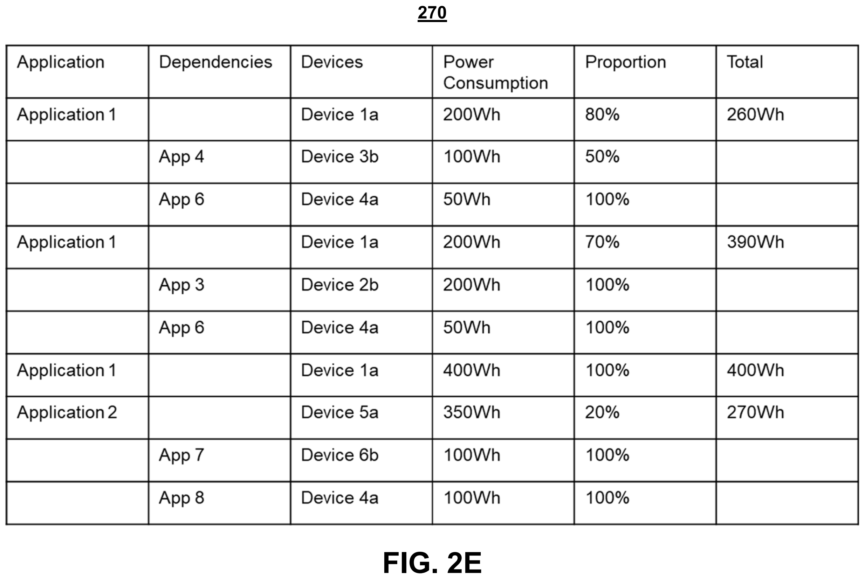

FIG. 2E shows an illustrative diagram providing application-level insights for the set of devices of FIG. 2A. For example, table 270 shows application-level insights for devices or network arrangements comprising applications with previously unknown dependencies.

As shown in table 270, this indicates a plurality of applications that may be executed across one or more devices and/or one or more network arrangements. The system may coordinate a plurality of applications across a computer network by utilizing middleware, orchestration tools, and/or communication protocols to enable seamless interaction and cooperation among the applications, even when they operate on different devices or within varied network configurations. This coordination may be achieved through service-oriented architectures (SOA) or microservices, where each application or service is modular and can function independently while being able to interact with others through well-defined interfaces, such as APIs or message queues. Network communication protocols such as TCP/IP, HTTP, and WebSockets allow data to be transmitted across devices, while synchronization mechanisms like distributed databases, cloud storage, or message brokers ensure that the data stays consistent across the system. Additionally, orchestration platforms such as Kubernetes or Docker Swarm manage the deployment, scaling, and operation of these applications across multiple environments, ensuring that dependencies are met, resources are optimized, and the system remains resilient. Security layers like encryption and authentication protocols also play a crucial role in maintaining the integrity and confidentiality of communication between the applications across the network. Overall, this coordination allows the system to function as a cohesive unit, even when distributed across diverse devices and network setups.

Table 270 also includes a plurality of application dependencies. For example, as the system coordinates tasks and/or functions using the plurality of applications across one or more devices and/or one or more network arrangements, the system may determine the dependencies between applications. The dependencies between applications when coordinating to execute processes typically revolve around data, resources, and service availability. Applications often depend on each other to provide specific services or data that are necessary for completing a task. For example, an e-commerce application might depend on a payment gateway to process transactions, or a front-end application may rely on back-end services to retrieve and display data. These dependencies are often managed through APIs or messaging systems that allow the applications to communicate and share information in real time. Furthermore, shared databases or distributed storage systems may be required to maintain consistency across applications, ensuring that all parts of the system have access to the same data. In addition to data, applications also depend on each other for shared resources, such as CPU, memory, or bandwidth, which must be efficiently allocated and managed, often by an orchestrator. If one application fails or becomes unavailable, it can trigger a cascading effect where dependent applications cannot function correctly. Additionally, applications often need to execute tasks in a specific order or within a set time frame to maintain the flow of processes, which requires effective coordination and monitoring. Overall, these dependencies form a complex web of interactions, and managing them is key to ensuring that the system operates smoothly and efficiently.

In some embodiments, the plurality of application dependencies may be based on an application mapping. For example, the application mapping may indicate relationships between a plurality of applications in the first application subset, wherein each of the plurality of applications is represented by respective nodes in the application mapping, wherein the respective nodes comprise a first node subset and a second node subset, wherein the first node subset comprises nodes with respective known dependencies, wherein the second node subset comprises nodes with respective virtual dependencies, and wherein the respective virtual dependencies are inferred based on the relationships between the plurality of applications and the respective known dependencies.

The system may generate an application mapping based on the plurality of application dependencies by analyzing the relationships and interactions between different applications and their respective known and virtual dependencies. This process starts by identifying the known dependencies, such as explicit service calls, data exchanges, or API integrations, which are represented as nodes in the first node subset. These nodes are connected to one another based on direct, observable interactions, such as when one application requests data from another or when a service is invoked. This forms the foundation of the application mapping, establishing a clear structure of how applications rely on one another.

To enrich the mapping, the system further analyzes indirect or inferred relationships to generate virtual dependencies, represented in the second node subset. These virtual dependencies may be based on patterns of interaction, such as shared data sources, similar network traffic behavior, or temporal correlations between processes. For example, if two applications frequently interact with a common third-party service or access the same database at similar times, the system may infer a virtual dependency between them, even if no direct interaction is explicitly defined. Machine learning or rule-based inference engines can be employed to detect these patterns and relationships, adding another layer of complexity to the application mapping.

The application mapping, therefore, consists of nodes representing individual applications and edges denoting their dependencies. The first subset includes nodes with clearly defined dependencies, while the second subset contains those with virtual dependencies inferred from observed behavior. This approach allows the system to visualize and manage both explicit and implicit relationships, enabling more effective orchestration, optimization, and fault tolerance across the network of applications.

In some embodiments, the system analyzes indirect or inferred relationships to generate virtual dependencies by collecting and examining usage metrics of devices and applications across the computer network. These usage metrics may include factors such as CPU usage, memory consumption, network traffic, data access patterns, and the timing of requests made to shared resources. By observing how these metrics behave over time, the system can identify patterns of interaction between applications that are not directly linked but show similar behavior. For instance, if two applications frequently interact with a common third-party service or access the same database at similar times, the system can detect these correlations by analyzing the usage metrics from both applications. This analysis could reveal that the applications are indirectly dependent on the same resources, leading to the inference of a virtual dependency between them.

To accomplish this, the system may employ machine learning algorithms or rule-based inference engines that can detect and interpret patterns within large sets of usage data. Machine learning models can be trained to recognize common dependency patterns by analyzing historical data, including identifying sequence of events that typically follow each other, usage spikes, or traffic bottlenecks that coincide across applications. Rule-based systems, on the other hand, might use predefined logic, such as "if two applications access the same database within a specific time window, infer a virtual dependency." By applying these techniques, the system can uncover relationships that are not explicitly defined in the network or application architecture but emerge from their operational behavior.

In some embodiments, the system analyzes indirect or inferred relationships to generate virtual dependencies by collecting and examining usage metrics from devices and applications across the computer network. These usage metrics include key performance indicators like CPU usage, memory consumption, network traffic, data access patterns, and the timing of requests made to shared resources. By monitoring these metrics continuously, the system builds a detailed profile of how various applications interact with the network and its resources. It then analyzes these metrics over specific time windows, execution workflows, and series of processing requests to detect patterns of coordinated behavior between applications, even if no direct communication exists between them.

For instance, if two applications consistently show spikes in CPU or memory usage at the same time while accessing the same database or network resource, the system might infer that they are indirectly dependent on the same resources. Similarly, the system might notice that a series of data access requests from different applications follow a particular sequence during certain workflows, suggesting an underlying relationship. By correlating network traffic behavior, the system can identify if multiple applications rely on the same service, even if this is not explicitly defined in the application's architecture. These patterns can reveal virtual dependencies-connections inferred from the observed behavior of the applications across the network.

The system uses this analysis to map out these relationships by leveraging machine learning models or rule-based logic. Machine learning algorithms can be trained to recognize complex usage patterns that indicate hidden dependencies, while rule-based systems can apply predetermined criteria to detect related usage behaviors. For example, if two applications exhibit synchronized resource usage over multiple observation periods, the system might infer a virtual dependency, adding it to the application's relationship map. This enriched mapping provides valuable insights into how applications might impact each other during execution, helping optimize system performance, resource management, and fault tolerance by accounting for both direct and indirect dependencies.

Table 270 includes a list of devices that service the applications. The system generates a list of devices that service applications by referencing an application mapping through the retrieval of application profiles from an application profile repository. This repository contains two sets of application profiles: the first set corresponds to applications with known dependencies, and the second set corresponds to applications with inferred virtual dependencies. The process begins by retrieving a first subset of application profiles that correspond to applications in a first application subset-applications that need to be analyzed for their device associations. Each profile in the repository contains detailed information about the application's dependencies, both explicit and inferred, as well as the devices that host or service the application.

For applications with known dependencies, the system identifies the devices that are directly involved in providing services to or interacting with the application. These devices could include servers, databases, network routers, or other infrastructure components explicitly linked to the application in the application mapping. For applications with virtual dependencies, the system examines the second set of profiles, which contain inferred relationships based on patterns detected through metrics like shared resource usage, temporal correlation, or network traffic similarities. The system uses this information to identify devices that, while not directly defined as dependencies, are indirectly involved in servicing the application, such as shared databases or intermediary services that multiple applications rely on.

Once the relevant profiles are retrieved and analyzed, the system compiles a comprehensive list of devices that are responsible for servicing the applications in both the known and virtual dependency sets. This list is critical for ensuring efficient resource management, monitoring, and troubleshooting, as it allows the system to understand how devices interact with and support the application ecosystem, whether through direct connections or through more subtle, inferred relationships.

Table 270 includes respective power consumption of the devices that service the applications. For example, the system determines the respective power consumption of the devices that service the applications by monitoring various performance and usage metrics of each device in real-time or through historical data analysis. These devices, which may include servers, storage units, network routers, and other hardware, typically have built-in sensors or external monitoring tools that capture key operational data, such as CPU utilization, memory usage, disk activity, and network traffic. By analyzing these metrics, the system can estimate the power consumption of each device based on the intensity and duration of its operations.

For example, devices operating under high CPU or memory loads will generally consume more power, especially during peak processing times, such as when they are handling resource-intensive tasks for specific applications. The system may use power models, which correlate usage metrics with known power consumption patterns for specific hardware types, to estimate how much power each device is consuming. Additionally, direct power monitoring systems, such as power distribution units (PDUs) or smart energy meters, may be deployed to track the actual electrical consumption of each device in real-time, providing precise data on power usage.

The system can further refine its analysis by mapping power consumption to specific applications, especially in multi-tenant environments where multiple applications are hosted on the same devices. By correlating application performance data with device usage metrics, the system can attribute a portion of a device's power consumption to the specific applications it services. This detailed insight allows for more accurate tracking of energy use across the network and provides critical data for optimizing power efficiency, reducing operational costs, and managing energy resources effectively in large-scale computing environments.

Table 270 shows a portion (or proportion) of the device usage metric corresponding to a specific application. The system may determine the portion (or proportion) of a device's usage metric corresponding to a specific application by monitoring and analyzing resource usage at a granular level, typically through performance monitoring tools that capture how much of a device's resources (such as CPU, memory, disk I/O, and network bandwidth) are consumed by each application running on the device. This is especially important in environments where multiple applications share the same infrastructure, such as virtualized servers, cloud platforms, or containerized environments. The system collects data about each application's activity, including how much of the device's resources are allocated and consumed by that application during specific time intervals.

To achieve this, the system uses process-level monitoring, where each application or service is treated as a distinct process or thread on the device. Resource usage is then tracked on a per-process basis, allowing the system to attribute the consumption of CPU cycles, memory usage, storage operations, or network requests to specific applications. For example, CPU and memory consumption can be measured by tracking how much processing time or memory space is consumed by the processes related to a given application. Similarly, disk I/O operations or network traffic can be monitored to determine the portion of these resources used by each application.

In addition to direct resource tracking, the system may also use resource allocation frameworks like container orchestrators (e.g., Kubernetes or Docker), which naturally segment resource usage between applications running in different containers or virtual machines. These frameworks can allocate specific amounts of CPU, memory, or network bandwidth to each application, allowing the system to precisely determine the proportion of device usage allocated to each.

By aggregating this data over time, the system calculates the proportion of total device usage that can be attributed to each specific application. This analysis is crucial for performance tuning, cost attribution (especially in cloud billing scenarios), and optimizing resource utilization, ensuring that each application's resource demands are accurately monitored and managed without affecting the overall performance of the system.

Table 270 includes a total consumption corresponding to a given application, in which the consumption is aggregated for the application and its dependencies. In some embodiments, the system determines the total consumption corresponding to a given application, including its dependencies, by aggregating the resource usage and power consumption of both the application itself and the devices or services it depends on. This process starts with monitoring the direct consumption of the application, tracking metrics such as CPU usage, memory allocation, disk I/O, and network bandwidth on the devices where the application is running. The system then extends this tracking to include all the dependencies the application interacts with, such as databases, APIs, third-party services, and shared resources.

To accurately attribute the consumption, the system relies on the application mapping, which defines both the known and virtual dependencies of the application. For each dependency, the system monitors the associated resource usage on the devices where these dependencies are hosted. For instance, if the application queries a database or communicates with a microservice, the system tracks the consumption of the database server or the microservice's host. The system may also use usage metrics from network monitoring tools to track how much network bandwidth is consumed during these interactions.

The system may then aggregate the resource consumption across all devices and services that are part of the application's execution flow. By adding up the consumption metrics from the application and its dependencies, the system calculates the total consumption for the entire application ecosystem. This aggregated consumption can include direct device usage (e.g., the application's CPU and memory consumption) and indirect usage from interacting dependencies (e.g., power usage from database queries or service calls).

In complex environments, where multiple applications may share dependencies, the system uses process-level or transaction-level monitoring to allocate a proportional share of the dependency's resource consumption to each application. For example, if several applications share the same database, the system can determine what proportion of database queries come from the given application and attribute a corresponding share of the database's consumption. This comprehensive view of total consumption allows the system to optimize performance, manage resource costs, and improve the efficiency of application deployment by understanding the complete resource footprint, including all direct and indirect interactions within the network.

Table 270 may be used by the system to generate recommendations for dependent applications, devices, arrangements, and/or potential aggregated usage metrics for an application. For example, the system may generate recommendations for dependent applications, devices, arrangements, and potential aggregated usage metrics for an application by analyzing the detected application dependencies, usage metrics corresponding to those dependencies, and the aggregated consumption data. The process begins by mapping out all known and inferred dependencies of the application, identifying the devices and services the application interacts with directly and indirectly. The system then collects and monitors usage metrics from these dependencies, such as CPU, memory, network bandwidth, and power consumption. By aggregating these metrics, the system creates a holistic view of the application's overall resource consumption, encompassing not only the application itself but also its interactions with dependent services and devices.

Once this comprehensive view is established, the system uses advanced analytics, including machine learning models or heuristic rules, to identify patterns, inefficiencies, or resource bottlenecks in the application's ecosystem. For example, the system might detect those certain dependencies, like a shared database or API service, are consistently overutilized during specific times, potentially impacting performance. Based on these insights, the system generates recommendations for optimizing the application and its dependencies. This could involve suggesting alternative resource arrangements, such as load balancing traffic across multiple devices or optimizing query performance on a shared database to reduce consumption.

Additionally, the system may recommend adjustments to the deployment architecture, such as migrating certain services to more efficient hardware, scaling resources dynamically during peak usage periods, or utilizing cloud resources for better elasticity. The system could also provide recommendations for energy efficiency, such as consolidating underutilized devices or shifting workloads to times when power costs are lower.

In terms of aggregated usage metrics, the system may project future resource needs based on current consumption patterns, providing recommendations for scaling infrastructure to handle anticipated growth or suggesting areas where resource use can be optimized. These recommendations are aimed at reducing costs, improving performance, and ensuring that the application and its dependencies are well-coordinated and efficient in their resource usage. The system may also flag potential risks, such as single points of failure in dependency chains or performance bottlenecks, and recommend redundancy or optimizations to mitigate these issues.

FIG. 3 shows illustrative components for a system used to generate power consumption predictions, in accordance with one or more embodiments. As shown in FIG. 3, system 300 may include mobile device 322 and mobile device 324. While shown as smartphones in FIG. 3, it should be noted that mobile device 322 and mobile device 324 may be any computing device, including, but not limited to, a laptop computer, a tablet computer, a handheld computer, and other computer equipment (e.g., a server), including "smart," wireless, wearable, and/or mobile devices. System 300 may also include cloud components. For example, cloud components may be implemented as a cloud computing system and may feature one or more component devices. It should be noted that, while one or more operations are described herein as being performed by particular components of system 300, these operations may, in some embodiments, be performed by other components of system 300. As an example, while one or more operations are described herein as being performed by components of mobile device 322, these operations may, in some embodiments, be performed by cloud components. In some embodiments, the various computers and systems described herein may include one or more computing devices that are programmed to perform the described functions. Additionally, or alternatively, multiple users may interact with system 300 and/or one or more components of system 300.

With respect to the components of mobile device 322 and mobile device 324, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or I/O circuitry. Each of these devices may also include a user input interface and/or user output interface (e.g., a display) for use in receiving and displaying data. For example, as shown in FIG. 3, both mobile device 322 and mobile device 324 include a display upon which to display data.

Additionally, as mobile device 322 and mobile device 324 are shown as touchscreen smartphones, these displays also act as user input interfaces. It should be noted that in some embodiments, the devices may have neither user input interfaces nor displays and may instead receive and display content using another device (e.g., a dedicated display device such as a computer screen and/or a dedicated input device such as a remote control, mouse, voice input, etc.). Additionally, the devices in system 300 may run an application (or another suitable program).

Each of these devices may also include electronic storages. The electronic storages may include non-transitory storage media that electronically stores information. The electronic storage media of the electronic storages may include one or both of (i) system storage that is provided integrally (e.g., substantially non-removable) with servers or client devices or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, a magnetic hard drive, a floppy drive, etc.), electrical-charge-based storage media (e.g., EEPROM, RAM, etc.), solid-state storage media (e.g., a flash drive, etc.), and/or other electronically readable storage media. The electronic storages may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

FIG. 3 also includes communication paths 328, 330, and 332. Communication paths 328, 330, and 332 may include the Internet, a mobile phone network, a mobile voice or data network (e.g., a 5G or LTE network), a cable network, a public switched telephone network, or other types of communications networks or combinations of communications networks. Communication paths 328, 330, and 332 may separately, or together, include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

System 300 also includes API layer 350. API layer 350 may allow the system to generate summaries across different devices. In some embodiments, API layer 350 may be implemented on mobile device 322 or mobile device 324. Alternatively, or additionally, API layer 350 may reside on one or more of cloud components. API layer 350 (which may be a REST or Web services API layer) may provide a decoupled interface to data and/or functionality of one or more applications. API layer 350 may provide a common, language-agnostic way of interacting with an application. Web services APIs offer a well-defined contract, called WSDL, that describes the services in terms of their operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in transactions.

API layer 350 may use various architectural arrangements. For example, system 300 may be partially based on API layer 350 such that there is a strong adoption of SOAP and RESTful Web services using resources like Service Repository and Developer Portal but with low governance, standardization, and separation of concerns. Alternatively, system 300 may be fully based on API layer 350 such that separation of concerns between layers like API layer 350, services, and applications is in place.

In some embodiments, the system architecture may use a microservice approach. Such systems may use two types of layers: a Front-End Layer and Back-End Layer, where microservices reside. In this kind of architecture, the role of the API layer 350 may provide integration between the Front End and Back End. In such cases, API layer 350 may use RESTful APIs (exposition to the Front End or even communication between microservices). API layer 350 may use AMQP (e.g., Kafka, RabbitMQ, etc.). API layer 350 may use incipient usage of new communications protocols such as gRPC, Thrift, etc.

In some embodiments, the system architecture may use an open API approach. In such cases, API layer 350 may use commercial or open source API Platforms and their modules. API layer 350 may use a developer portal. API layer 350 may use strong security constraints applying WAF and DDoS protection, and API layer 350 may use RESTful APIs as a standard for external integration.

System 300 also includes model 302, which may be a machine learning model, artificial intelligence model, etc. (which may be referred to collectively as "models" herein). Model 302 may take inputs 304 and provide outputs 306. The inputs may include multiple datasets, such as a training dataset and a test dataset. Each of the plurality of datasets (e.g., inputs 304) may include data subsets related to user data, predicted forecasts and/or errors, and/or actual forecasts and/or errors. In some embodiments, outputs 306 may be fed back to model 302 as input to train model 302 (e.g., alone or in conjunction with user indications of the accuracy of outputs 306, labels associated with the inputs, or other reference feedback information). For example, the system may receive a first labeled feature input, wherein the first labeled feature input is labeled with a known prediction for the first labeled feature input. The system may then train the first machine learning model to classify the first labeled feature input with the known prediction (e.g., an energy consumption prediction, a carbon impact, a virtual specification, etc.).

In a variety of embodiments, model 302 may update its configurations (e.g., weights, biases, or other parameters) based on the assessment of its prediction (e.g., outputs 306) and reference feedback information (e.g., user indication of accuracy, reference labels, or other information). In a variety of embodiments, where model 302 is a neural network, connection weights may be adjusted to reconcile differences between the neural network's prediction and reference feedback. In a further use case, one or more neurons (or nodes) of the neural network may require that their respective errors are sent backward through the neural network to facilitate the update process (e.g., backpropagation of error). Updates to the connection weights may, for example, be reflective of the magnitude of error propagated backward after a forward pass has been completed. In this way, for example, the model 302 may be trained to generate better predictions.

In some embodiments, the model (e.g., model 302) may automatically perform actions based on outputs 306. In some embodiments, the model (e.g., model 302) may not perform any actions. The output of the model (e.g., model 302) may be used to determine an energy consumption prediction, a carbon impact, a virtual specification, etc.

As shown in FIG. 3, in some embodiments, model 302 may be trained by taking inputs 304 and provide outputs 306. Model 302 may include an artificial neural network. In such embodiments, model 302 may include an input layer and one or more hidden layers. Each neural unit of model 302 may be connected with many other neural units of model 302. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. Model 302 may be self-learning and trained, rather than explicitly programmed, and can perform significantly better in certain areas of problem solving as compared to traditional computer programs. During training, an output layer of model 302 may correspond to a classification of model 302, and an input known to correspond to that classification may be input into an input layer of model 302 during training. During testing, an input without a known classification may be input into the input layer, and a determined classification may be output.

In some embodiments, model 302 may include multiple layers (e.g., where a signal path traverses from front layers to back layers). In some embodiments, backpropagation techniques may be utilized by model 302, where forward stimulation is used to reset weights on the "front" neural units. In some embodiments, stimulation and inhibition for model 302 may be more free-flowing, with connections interacting in a more chaotic and complex fashion. During testing, an output layer of model 302 may indicate whether or not a given input corresponds to a classification of model 302 (e.g., an energy consumption prediction, a carbon impact, a virtual specification, etc.).

Model 302 is shown as a convolutional neural network. A convolutional neural network consists of an input layer (e.g., input 304), hidden layers, and an output layer (e.g., output 306). As shown in FIG. 3, the middle layers are called hidden because their inputs and outputs are masked by the activation function and final convolution. In a convolutional neural network, the hidden layers include layers that perform convolutions. Model 302 may comprise convolutional layers that convolve the input and pass its result to the next layer. Model 302 includes local and/or global pooling layers along with traditional convolutional layers. Pooling layers reduce the dimensions of data by combining the outputs of neuron clusters at one layer into a single neuron in the next layer. Also, as shown, model 302 may comprise fully connected layers that connect every neuron in one layer to every neuron in another layer.

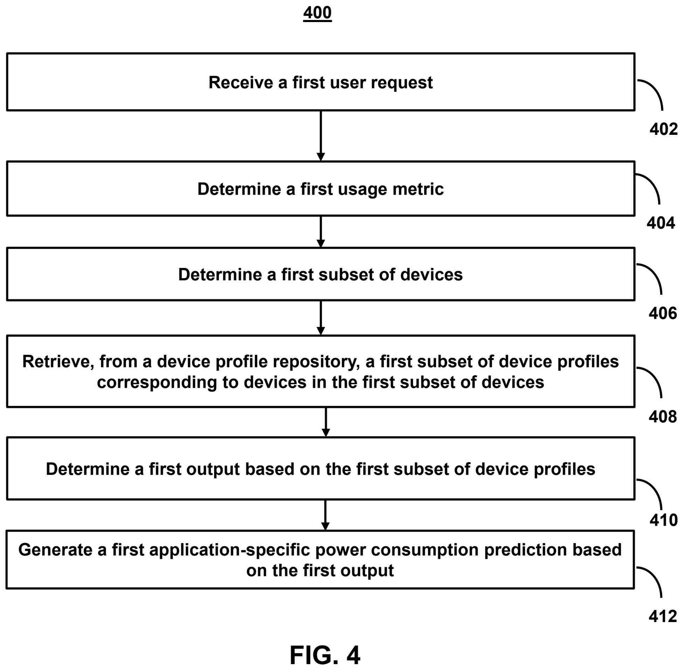

FIG. 4 shows a flowchart of the steps involved in generating power consumption predictions, in accordance with one or more embodiments. For example, the system may use process 400 (e.g., as implemented on one or more system components described above) in order to provide power consumption predictions for selected applications within network arrangements featuring devices with non-homogenous or unknown specifications. For example, the system may use a model and/or algorithm that collects a list of devices (including vendor, model, type, serial number, name, geographical location), pulls device power consumption (or builds a digital twin if needed), pulls device utilization (total capacity, used capacity), calculates device efficiency (e.g., by comparing two figures: power consumption/total capacity versus power consumption/used capacity), collects a list of applications and/or their processes running on the device (e.g., based on an application identifier and server (client) name), calculates percentage of resources consumed by application/process on the device, and uses global emissions factors per location to calculate carbon emission values for the devices and applications.

At step 402, process 400 (e.g., using one or more components described above) receives a first user request. For example, the system may receive a first user request to generate a first application-specific power consumption prediction for a first application. For example, the system may receive a request from a user to see current or prediction energy consumption and/or carbon related emissions stemming from the use of one or more applications in one or more device arrangements within a network.

At step 404, process 400 (e.g., using one or more components described above) determines a first usage metric. For example, the system may determine a first usage metric for the first application, wherein the first usage metric describes metadata related to one or more processes performed by the first application across a first network, wherein the first network comprises a plurality of devices. The system may determine one or more usage metrics for the first application. These usage metrics may comprise present power consumption as expressed in watt-hours, total capacity expressed in terabytes for storage arrays and number of ports for switches, used capacity expressed in terabytes for storage arrays and number of ports for switches, a list of logical data volumes created on data arrays for client's consumption, logical data volumes utilization expressed in gigabytes, a list of (or number of) servers (clients) connected to the logical data volumes, and/or other global emissions factors.

In some embodiments, the system may determine one or more usage metrics. For example, the usage metric may describe the present power consumption (e.g., expressed in watt-hours), a total capacity (e.g., expressed in terabytes) for storage arrays and a number of ports for switches, used capacity (e.g., expressed in terabytes) for storage arrays and a number of ports for switches, a list of logical data volumes created on data arrays for an application's consumption, a logical data volumes utilization (e.g., expressed in gigabytes), list of servers (clients) connected to logical data volumes, etc. For example, the system may determine a first process performed by the first application. The system may determine a data volume created on a data array for consumption by the first application during the first process. In another example, the system may determine a first process performed by the first application. The system may determine watt-hour power consumption by the first application during the first process. In another example, the system may determine a first process performed by the first application. The system may determine a number of ports for switches dedicated to the first application during the first process. In another example, the system may determine a first process performed by the first application. The system may determine a number of data arrays created for the first application during the first process.

At step 406, process 400 (e.g., using one or more components described above) determines a first subset of devices. For example, the system may determine, from the plurality of devices, a first subset of devices for serving the first application based on the first usage metric. For example, the system may determine what devices of a plurality of available devices are used to serve the first application.

In some embodiments, the system may determine a subset of devices that are serving a given application. To do so, the system may retrieve application and/or device identifiers for devices active during a process of the application. For example, the system may determine a number of devices of the plurality of devices required by the first application based on the first usage metric. The system may determine the first subset of devices based on the number of devices. In another example, the system may determine a first process performed by the first application based on the first usage metric. The system may filter the plurality of devices based on whether a respective device is utilized during the first process.

At step 408, process 400 (e.g., using one or more components described above) retrieves, from a device profile repository, a first subset of device profiles corresponding to devices in the first subset of devices. For example, the system may retrieve, from a device profile repository, a first subset of device profiles corresponding to devices in the first subset of devices, wherein the device profile repository comprises a first set of device profiles corresponding to devices with known specifications and a second set of device profiles corresponding to devices with virtual specifications. The system may generate a device profile that comprises both known device profiles as well as virtual device profiles.

The system may, in some embodiments, use an artificial intelligence model. For example, the system may generate a first feature input, wherein the first feature input is based on the first application and the first subset of devices. The system may then input the first feature input into the first model, wherein the first model comprises an artificial intelligence model.

The system may use one or more methodologies for generating the device profile repository. In particular, the system may use one or more methodologies for generating virtual device profiles and/or determining virtual specifications for a device. In some embodiments, the system may determine an aggregate power consumption (e.g., aggregate carbon impact) for one or more devices. For example, the system may retrieve known specifications for one or more devices that are connected to (or accessed with) a device with an unknown specification. The system may then determine a component power consumption (e.g., component carbon impact) for the one or more devices and then determine a difference between the component power consumption (e.g., component carbon impact) and the aggregate power consumption (e.g., aggregate carbon impact). The system may then use the difference to estimate the virtual specification.

For example, the system may retrieve an aggregate carbon impact for a first device and a second device. The system may retrieve a first device profile for the first device, wherein the first device profile is based on a first known specification. The system may determine a first component carbon impact for the first device based on the first known specification. The system may determine a difference between the first component carbon impact and the aggregate carbon impact. The system may determine a second component carbon impact for the second device based on the difference. The system may determine a second virtual specification for the second device based on the second component carbon impact.

In some embodiments, the system may determine an aggregate processing metric for one or more devices. A processing metric may comprise a qualitative or quantitative metric resulting from a process performed by an application. For example, the processing metric may comprise a metric related to the performance of one or more application functions (e.g., how quickly data is processed, how quickly data is stored, etc.). For example, the system may retrieve known specifications for one or more devices that are connected to (or accessed with) a device with an unknown specification. The system may then determine a component processing metric for the one or more devices and then determine a difference between the component processing metric and the aggregate processing metric. The system may then use the difference to estimate the virtual specification.

For example, the system may retrieve an aggregate processing metric for a first device and a second device. The system may retrieve a first device profile for the first device, wherein the first device profile is based on a first known specification. The system may determine a first component processing metric for the first device based on the first known specification. The system may determine a difference between the first component processing metric and the aggregate processing metric. The system may determine a second processing metric for the second device based on the difference. The system may determine a second virtual specification for the second device based on the second processing metric.

In some embodiments, the system may determine a network mapping for a network, and the system may generate the virtual device profiles based on the network mapping. For example, the system may determine relationships between devices in the mapping. The relationships may comprise information about how devices are connected, how devices are used, and/or what devices are grouped when performing one or more processes for one or more applications. Within the network mapping, each device (or group of devices) may be represented by a node. The system may then determine known node characteristics (e.g., a processing metric, carbon impact, energy consumption metric, etc.) and use the known node characteristics to determine the virtual node characteristics. For example, the node characteristics may comprise a metric related to the performance of one or more application functions (e.g., how quickly data is processed, how quickly data is stored, etc.). For example, the system may retrieve known node characteristics for one or more devices that are connected to (or accessed with) a device with an unknown specification. The system may then determine a component node characteristic for the one or more devices and then determine a difference between the component node characteristics and the aggregate node characteristics. The system may then use the difference to estimate the virtual specification.

For example, the system may retrieve a network mapping for the first network, wherein the network mapping indicates relationships between the plurality of devices and wherein each of the plurality of devices is represented by respective nodes in the network mapping. The system may identify a first node subset of the respective nodes, wherein the first node subset comprises nodes with respective known specifications. The system may generate a known network mapping based on populating the network mapping at each node of the first node subset with the respective known specifications. The system may identify a second node subset of the respective nodes, wherein the second node subset comprises nodes with respective unknown specifications and wherein the second node subset comprises unpopulated nodes in the known network mapping. The system may infer respective virtual specifications for each node in the second node subset based on the relationships between the plurality of devices and the respective known specifications in the known network mapping.

At step 410, process 400 (e.g., using one or more components described above) determines a first output based on the first subset of device profiles. For example, the system may determine, using a first model, a first output, wherein the first model is trained to generate application-specific power consumption predictions for respective applications based on inputted usage metrics for the respective applications and respective device profiles, from the device profile repository, for devices serving the respective applications. The system may use a model to determine application-specific power consumption prediction using one or more models. In some embodiments, the system may use artificial intelligence models (e.g., as described in FIG. 3 above). In some embodiments, the system may use other model techniques.

In some embodiments, the system may generate an output that is used by the system to determine an application-specific power consumption prediction. In some embodiments, the output may comprise the power consumption prediction. Additionally, or alternatively, the system may reformat the output into the power consumption prediction and/or base the power consumption prediction on the output. For example, the system may determine a carbon impact for serving the first application with the first subset. The system may determine the first application-specific power consumption prediction based on the carbon impact.

At step 412, process 400 (e.g., using one or more components described above) generates a first application-specific power consumption prediction based on the first output. For example, the system may generate for display, on a user interface, the first application-specific power consumption prediction based on the first output. In some embodiments, the application-specific power consumption prediction may comprise a prediction related to a past, current, and/or future use of power. Additionally, or alternatively, the system may express the prediction in terms of carbon impact.

In some embodiments, the application-specific power consumption prediction and/or its carbon impact may be based on a type of power source powering the devices. For example, the system may account for the carbon impact of different manners in which electricity for a given device is generated. For example, the system may determine a different carbon impact for devices powered by solar or wind power from that of coal or nuclear power. That is, the system may determine an average or aggregate carbon impact ratio for the power source (e.g., based on third-party information) and adjust the carbon impact accordingly. For example, the system may determine a power source for powering the first subset. The system may determine the carbon impact ratio for the power source. The system may adjust the carbon impact based on the carbon impact ratio.

In some embodiments, the system may determine the type of power source based on a geographic location (or network location) of a power source. For example, the system may determine that a server farm is in a geographic location that is served by a particular power source (or a series of different power sources, which may be defined by a percentage). For example, the system may determine a geographic location for the first subset. The system may determine the power source based on the geographic location. In another example, the system may determine a network location for the first subset. The system may determine the power source based on the network location.

It is contemplated that the steps or descriptions of FIG. 4 may be used with any other embodiment of this disclosure. In addition, the steps and descriptions described in relation to FIG. 4 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 4.

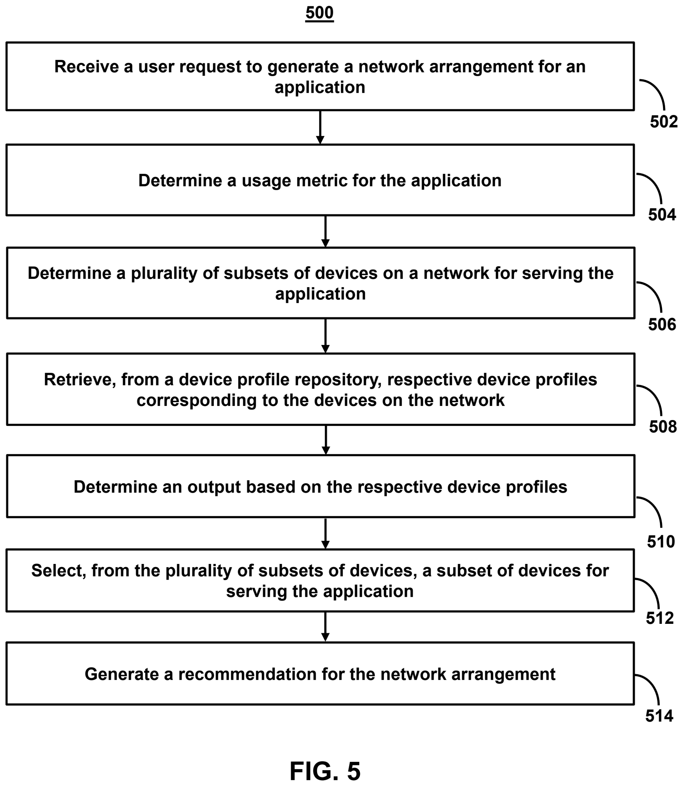

FIG. 5 shows a flowchart of the steps involved in generating recommendations for network arrangements, in accordance with one or more embodiments. For example, the system may use process 500 (e.g., as implemented on one or more system components described above) in order to provide power consumption predictions for selected applications within network arrangements featuring devices with non-homogenous or unknown specifications. For example, the system may use a model and/or algorithm that collects a list of devices (including vendor, model, type, serial number, name, geographical location), pulls device power consumption (or builds a digital twin if needed), pulls device utilization (total capacity, used capacity), calculates device efficiency (e.g., by comparing two figures: power consumption/total capacity versus power consumption/used capacity), collects a list of applications and/or their processes running on the device (e.g., based on an application identifier and server (client) name), calculates percentage of resources consumed by application/process on the device, and uses global emissions factors per location to calculate carbon emission values for the devices and applications. The system may then use this information to suggest network arrangements for specific applications that optimize one or more usage metrics.

At step 502, process 500 (e.g., using one or more components described above) receives a user request to generate a network arrangement for an application. For example, the system may receive a first user request to generate a first network arrangement of a plurality of devices for a first application across a first network. For example, the system may receive a request from a user to receive a recommendation of one or more devices (and/or network arrangements) to use to power a specified application based on current and/or prediction energy consumption and/or carbon related emissions stemming from the use of the application in one or more device arrangements within the network.

At step 504, process 500 (e.g., using one or more components described above) determines a usage metric for the application. For example, the system may determine a first usage metric for the first application, wherein the first usage metric requirement describes required metadata related to one or more processes performed by the first application. The system may determine one or more usage metrics for the first application. These usage metrics may comprise present power consumption as expressed in watt-hours, total capacity expressed in terabytes for storage arrays and number of ports for switches, used capacity expressed in terabytes for storage arrays and number of ports for switches, a list of logical data volumes created on data arrays for client's consumption, logical data volumes utilization expressed in gigabytes, a list of (or number of) servers (clients) connected to the logical data volumes, and/or other global emissions factors.

In some embodiments, the system may determine one or more usage metrics that describe different components and/or processes used to facilitate an application. For example, the usage metric may describe the present power consumption (e.g., expressed in watt-hours), a total capacity (e.g., expressed in terabytes) for storage arrays and a number of ports for switches, used capacity (e.g., expressed in terabytes) for storage arrays and a number of ports for switches, a list of logical data volumes created on data arrays for an application's consumption, a logical data volumes utilization (e.g., expressed in gigabytes), list of servers (clients) connected to logical data volumes, etc. For example, the system may determine a first process performed by the first application. The system may determine a data volume created on a data array for consumption by the first application during the first process. In another example, the system may determine a first process performed by the first application. The system may determine watt-hour power consumption by the first application during the first process. In another example, the system may determine a first process performed by the first application. The system may determine a number of ports for switches dedicated to the first application during the first process. In another example, the system may determine a first process performed by the first application. The system may determine a number of data arrays created for the first application during the first process.

At step 506, process 500 (e.g., using one or more components described above) determines a plurality of subsets of devices on a network for serving the application. For example, the system may determine, from the plurality of devices, a plurality of subsets of devices for serving the first application. For example, the system may determine what devices (and/or arrangements thereof) of a plurality of available devices are used to serve the first application.

In some embodiments, the system may determine a subset of device types that serve or are required to serve a given application. To do so, the system may retrieve application and/or device type identifiers for devices active during a process of the application. For example, the system may determine device types of a plurality of device types required by the first application based on the first usage metric. The system may determine the first subset of devices based on the device types. In another example, the system may determine a first process performed by the first application based on the first usage metric. The system may filter the plurality of devices based on whether a respective device type is utilized during the first process.

In some embodiments, the system may determine a subset of devices that are serving or are required to serve a given application. To do so, the system may retrieve application and/or device identifiers for devices active during a process of the application. For example, the system may determine a number of devices of the plurality of devices required by the first application based on the first usage metric. The system may determine the first subset of devices based on the number of devices. In another example, the system may determine a first process performed by the first application based on the first usage metric. The system may filter the plurality of devices based on whether a respective device is utilized during the first process.

In some embodiments, the system may utilize a device taxonomy to determine what devices and/or device types are required by an application and/or usage metric. A device taxonomy in a computer network may refer to the classification or categorization of different devices based on their functions, roles, and/or characteristics within the network. For example, the system may retrieve a first device taxonomy for the first network, wherein the first device taxonomy indicates required device types corresponding to different usage metrics. The system may then determine, based on the first device taxonomy, that the device type corresponds to the first usage metric.

In some embodiments, the system may utilize multiple device taxonomies. In such cases, the system may select a taxonomy to use based on one or more taxonomy identifiers. The taxonomy identifiers may be specific to an application, usage metric, network, etc. Additionally, or alternatively, the system may receive a user input indicating a taxonomy identifier.

For example, a first device taxonomy may be structure based on roles of devices. In such cases, the system may determine what roles are required to process a given application and select the device types accordingly. Such a device taxonomy may comprise end devices (e.g., computers (desktops, laptops, and workstations), servers (file servers, application servers, and web servers), mobile devices (smartphones and tablets), printers, IP phones, etc.), network infrastructure devices (e.g., routers, switches (Ethernet switches and Layer 3 switches), firewalls, load balancers, wireless access points, network bridges, etc.), network security devices (e.g., Intrusion Detection Systems (IDS), Intrusion Prevention Systems (IPS), Virtual Private Network (VPN) concentrators, proxy servers, network security appliances (Unified Threat Management), etc.), network services devices (e.g., Domain Name System (DNS) servers, Dynamic Host Configuration Protocol (DHCP) servers, Network Time Protocol (NTP) servers, Network monitoring devices (SNMP), Network attached storage (NAS) devices, etc.), Network Management Devices (e.g., Network management systems (NMS), configuration management servers, log servers, syslog servers, traffic analyzers, etc.), and/or miscellaneous devices (e.g., media converters, power over Ethernet (PoE) injectors, network-attached cameras (IP cameras), voice over IP (VoIP) gateways, etc.).

In another example, a first device taxonomy may be structured based on power consumption of devices. In such cases, the system may determine what devices are likely to contribute most to power consumption (or another usage metric) when processing a given application. The system may then determine a recommendation based on these devices while minimizing or ignoring devices that are unlikely to contribute to (or have a negligible effect on) power consumption (or another usage metric) when processing the given application. A taxonomy of power usage in a computer network may refer to the categorization or classification of power consumption patterns or devices within a network. Such a device taxonomy may comprise network infrastructure devices such as core switches (e.g., high-capacity switches that handle the backbone of the network infrastructure typically consume a significant amount of power), distribution switches (e.g., switches that connect end devices to the network and generally have moderate power requirements), and routers (e.g., devices that facilitate communication between networks and can vary in power consumption based on their capacity and features). Such a device taxonomy may also comprise end devices such as desktop computers (e.g., traditional desktop computers typically consume more power compared to other end devices due to their higher processing capabilities), laptops (e.g., laptops are generally designed for better power efficiency, as they are built for portability and battery operation), and servers (e.g., servers, depending on their configuration and workload, can range from moderate to high power consumption). Such a device taxonomy may also comprise network peripherals such as printers (e.g., printers can have varying power requirements depending on their type, such as laser printers consuming more power compared to inkjet printers), Wireless Access Points (e.g., access points that provide wireless connectivity generally have moderate power consumption), Uninterruptible Power Supply (UPS) (e.g., UPS systems are used to provide backup power during outages and can range in capacity and efficiency, affecting power usage), and Power Distribution Units (PDUs) (e.g., PDUs distribute power to multiple devices and can often include features such as power monitoring, metering, and remote power control).

In another example, a first device taxonomy may be structured based on energy efficiency measures (e.g., power-saving features and/or energy-efficient hardware) available for different devices. For example, various devices, including network cards, switches, and servers, may have power-saving features that reduce energy consumption during idle periods. Additionally, some devices are designed to be more energy-efficient, incorporating technologies such as Energy Star compliance or low-power components.

At step 508, process 500 (e.g., using one or more components described above) retrieves, from a device profile repository, respective device profiles corresponding to the devices on the network. For example, the system may retrieve, from a device profile repository, respective device profiles corresponding to devices on the first network, wherein the device profile repository comprises a first set of device profiles corresponding to devices with known specifications and a second set of device profiles corresponding to devices with virtual specifications. The system may generate a device profile that comprises both known device profiles as well as virtual device profiles.

The system may, in some embodiments, use an artificial intelligence model. For example, the system may generate a first feature input, wherein the first feature input is based on the first application and the first subset of devices. The system may then input the first feature input into the first model, wherein the first model comprises an artificial intelligence model.

The system may use one or more methodologies for generating the device profile repository. In particular, the system may use one or more methodologies for generating virtual device profiles and/or determining virtual specifications for a device. In some embodiments, the system may determine an aggregate power consumption (e.g., aggregate carbon impact) for one or more devices. For example, the system may retrieve known specifications for one or more devices that are connected to (or accessed with) a device with an unknown specification. The system may then determine a component power consumption for one or more devices and then determine a difference between the component power consumption and aggregate power consumption. The system may then use the difference to estimate the virtual specification. The system may then determine a recommendation for a network arrangement based on the first component carbon impact.

For example, the system may retrieve an aggregate power consumption for a first device and a second device. The system may retrieve a first device profile for the first device, wherein the first device profile is based on a first known specification. The system may determine a first component power consumption for the first device based on the first known specification. The system may determine a difference between the first component power consumption and the aggregate power consumption. The system may determine a second component power consumption for the second device based on the difference. The system may determine a second virtual specification for the second device based on the second component power consumption. Using this information, the system may prefer the first device over the second device in a recommended network arrangement.

In some embodiments, the system may determine an aggregate processing metric for one or more devices. A processing metric may comprise a qualitative or quantitative metric resulting from a process performed by an application. For example, the processing metric may comprise a metric related to the performance of one or more application functions (e.g., how quickly data is processed, how quickly data is stored, etc.). For example, the system may retrieve known specifications for one or more devices that are connected to (or accessed with) a device with an unknown specification. The system may then determine a component processing metric for one or more devices and then determine a difference between the component processing metric and the aggregate processing metric. The system may then use the difference to estimate the virtual specification.

In some embodiments, the aggregate processing metric may be specific to a network arrangement. For example, the system may prefer one network arrangement over another based on the aggregate processing metric for one or more devices in a given network arrangement.

For example, the system may retrieve an aggregate processing metric for a first device and a second device. The system may retrieve a first device profile for the first device, wherein the first device profile is based on a first known specification. The system may determine a first component processing metric for the first device based on the first known specification. The system may determine a difference between the first component processing metric and the aggregate processing metric. The system may determine a second processing metric for the second device based on the difference. The system may determine a second virtual specification for the second device based on the second processing metric.

In some embodiments, the system may determine a network mapping for a network, and the system may generate the virtual device profiles based on the network mapping. For example, the system may determine relationships between devices in the mapping. The relationships may comprise information about how devices are connected, how devices are used, and/or what devices are grouped when performing one or more processes for one or more applications. Within the network mapping, each device (or group of devices) may be represented by a node. The system may then determine known node characteristics (e.g., a processing metric, carbon impact, energy consumption metric, etc.) and use the known node characteristics to determine the virtual node characteristics. For example, the node characteristics may comprise a metric related to the performance of one or more application functions (e.g., how quickly data is processed, how quickly data is stored, etc.). For example, the system may retrieve known node characteristics for one or more devices that are connected to (or accessed with) a device with an unknown specification. The system may then determine a component node characteristic for the one or more devices and then determine a difference between the component node characteristics and the aggregate node characteristics. The system may then use the difference to estimate the virtual specification.

For example, the system may retrieve a network mapping for the first network, wherein the network mapping indicates relationships between the plurality of devices and wherein each of the plurality of devices is represented by respective nodes in the network mapping. The system may identify a first node subset of the respective nodes, wherein the first node subset comprises nodes with respective known specifications. The system may generate a known network mapping based on populating the network mapping at each node of the first node subset with the respective known specifications. The system may identify a second node subset of the respective nodes, wherein the second node subset comprises nodes with respective unknown specifications and wherein the second node subset comprises unpopulated nodes in the known network mapping. The system may infer respective virtual specifications for each node in the second node subset based on the relationships between the plurality of devices and the respective known specifications in the known network mapping.

Using the network mapping, the system may determine a recommendation for a network arrangement. For example, the system may determine a network topology, such as a star, bus, ring, or mesh, influences the arrangement of devices and the flow of data within the network. The choice of network topology depends on factors like scalability, fault tolerance, cost, and/or other usage metric.

At step 510, process 500 (e.g., using one or more components described above) determines an output based on the respective device profiles. For example, the system may determine, using a first model, a first output, wherein the first model is trained to generate application-specific power consumption predictions for respective applications based on inputted usage metrics for the respective applications and respective device profiles, from the device profile repository, for devices serving the respective applications. The system may use a model to determine application-specific power consumption prediction using one or more models. In some embodiments, the system may use artificial intelligence models (e.g., as described in FIG. 3 above). In some embodiments, the system may use other model techniques.

In some embodiments, the system may use multiple models. For example, the system may use a first model to generate application-specific power consumption predictions for respective applications. The system may then use a second model to generate recommendations for network arrangements. A model that is used to generate recommendations for network arrangements may use various inputs, including, but not limited to, application-specific power consumption predictions for respective applications, to generate recommendations for network arrangements. For example, while the model may prefer arrangements that optimize one or more usage metrics, the model may consider other factors.

For example, the system may determine bandwidth and/or latency requirements in a current system. For example, the specific computing tasks may have different requirements in terms of bandwidth (data transfer capacity) and latency (network delay). High-bandwidth tasks or tasks sensitive to latency may require specific network arrangements, such as using highspeed connections or minimizing the number of network hops. Additionally, or alternatively, in situations where a computing task involves distributing workload across multiple servers or resources, load balancing techniques may be employed. Load balancers help determine the most efficient distribution of tasks to optimize resource utilization and prevent bottlenecks. In another example, the system may consider redundancy and fault tolerance. For example, critical computing tasks often require redundant network arrangements to ensure high availability and fault tolerance. Redundancy can involve duplicate network paths, failover mechanisms, or backup systems to mitigate the impact of network failures. Additionally, or alternatively, the model may consider Quality of Service (QoS) requirements. For example, some computing tasks, such as real-time video streaming or voice communication, have strict QoS requirements. QoS mechanisms prioritize and allocate network resources accordingly to ensure smooth and uninterrupted delivery of such tasks. Additionally, or alternatively, the system may consider security. For example, security considerations, such as data confidentiality, integrity, and authentication, can influence the selection of network arrangements. Secure network protocols, encryption, and VPNs may be employed to protect sensitive computing tasks.

In some embodiments, the system may generate an output that is used by the system to determine a recommendation. In some embodiments, the output may comprise the power consumption prediction and/or a recommendation for a network arrangement. Additionally, or alternatively, the system may reformat the output into the network arrangement. For example, the system may determine a power consumption for serving the first application with a first subset of devices. The system may determine the recommendation based on the power consumption.

At step 512, process 500 (e.g., using one or more components described above) selects from the plurality of subsets of devices, a subset of devices for serving the application. For example, the system may select, from the plurality of subsets of devices, a first subset of devices for serving the first application based on the first output.

In some embodiments, the system may determine respective application-specific power consumption predictions for the plurality of subsets of devices. The system may then rank and/or filter different subsets. For example, the system may select the subset with the lowest (or optimized) application-specific power consumption predictions.

In some embodiments, the system may use a model to select the subset. For example, the model may comprise an artificial intelligence model (as described herein) and/or may consider additional factors such as bandwidth and latency requirements, load balancing, redundancy and fault tolerance, QoS, and/or network security as described above. Additionally, the system may receive inputs (e.g., via a user) requesting additional considerations and/or requirements. For example, the system may receive requirements related to required technology stacks to use, declared performance characteristics and/or usage metrics that must be met, and/or localization requirements.

For example, the system may receive a requirement to use a particular technology stack. A technology stack may refer to a collection of software, protocols, and technologies that are used together to provide specific functionalities or services within the network. It represents the layers (e.g., physical layer, data link layer, network layer, transport layer, etc.) of software and components that work together to enable network communication and services. Based on the technology stack used, the system may adjust the recommendation network arrangement. For example, selecting the first subset of devices for serving the first application based on the first output may further comprise the system receiving a technology stack requirement for processing the first application and determining the first subset meets the technology stack requirement.

In another example, the system may receive a requirement to use a particular location for processing an application (e.g., due to regulatory compliance and/or other considerations). Localization refers to the process of identifying the physical location or geographical position of network devices, systems, or users within a network or the internet. Localization can be essential for various purposes, including network management, troubleshooting, security, and providing location-based services. Based on the localization requirement, the system may adjust the recommendation network arrangement. For example, selecting the first subset of devices for serving the first application based on the first output may further comprise the system receiving a localization requirement for processing the first application and determining the first subset meets the localization requirement.

At step 514, process 500 (e.g., using one or more components described above) generates a recommendation for the network arrangement. For example, the system may generate for display, on a user interface, the recommendation based on the first output. In some embodiments, the recommendation may comprise a prediction related to a past, current, and/or future use of power for one or more network arrangements. Additionally, or alternatively, the system may express the prediction in terms of carbon impact and/or other value.

In some embodiments, the recommendation and/or its power consumption may be based on a type of power source powering the devices. For example, the system may account for the power consumption of different manners in which electricity for a given device is generated. For example, the system may determine a different power consumption for devices powered by solar or wind power from that of coal or nuclear power. That is, the system may determine an average or aggregate power consumption ratio for the power source (e.g., based on third-party information) and adjust the power consumption accordingly. For example, the system may determine a power source for powering the first subset and/or network arrangement. The system may determine the power consumption ratio for the power source. The system may adjust the carbon impact based on the power consumption ratio.

In some embodiments, the system may determine the type of power source based on a geographic location (or network location) of a power source. For example, the system may determine that a server farm is in a geographic location that is served by a particular power source (or a series of different power sources, which may be defined by a percentage). For example, the system may determine a geographic location for the first subset. The system may determine the power source based on the geographic location. In another example, the system may determine a network location for the first subset. The system may determine the power source based on the network location. Based on this information, the system may adjust the network arrangement used.

For example, the system may collect information around "cost" of power generation. "Cost" can be expressed in money but may also be expressed as power-mix value (share of green energy). In such cases, the system may select between two networks (e.g., two data centers in different locations). The two networks may both be equipped with wind energy sources and infrastructure ready to host an application. The system may assess the consequences of data/application migration between datacenters versus predicted safety on a windy day in one of those. The system may also check the feasibility of such migration based on previously gathered data around infrastructure metrics.

It is contemplated that the steps or descriptions of FIG. 5 may be used with any other embodiment of this disclosure. In addition, the steps and descriptions described in relation to FIG. 5 may be done in alternative orders, or in parallel, to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 5.

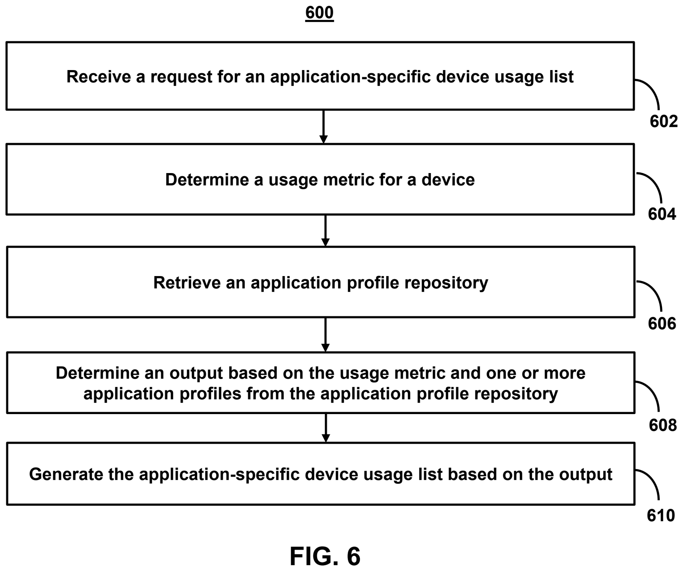

FIG. 6 shows a flowchart of the steps involved in determining applications being serviced by one or more devices, in accordance with one or more embodiments. For example, in some embodiments, process 600 may describe one or more steps for providing application-level insights for devices or network arrangements comprising applications with unknown dependencies (e.g., on other applications).

At step 602, process 600 (e.g., using one or more components described above) receives a request for an application-specific device usage list. For example, the system may receive a first user request to generate a first application-specific device usage list for a first application. In another example, the system may receive a first user request to generate a first application-specific device usage list for a first application of a plurality of applications.

In some embodiments, the system may receive a request for an application-specific device usage list through an interface that allows users to input queries or commands, such as a management dashboard, API call, or command-line interface. For example, when a user submits a request to generate a first application-specific device usage list for a particular application, the system captures this request, which typically includes the name or identifier of the target application. The request may also specify additional parameters, such as a time range for analyzing usage, specific types of metrics (e.g., CPU, memory, network traffic), or the inclusion of known and virtual dependencies. Upon receiving the request, the system retrieves the relevant application profile from its internal repository, which contains details about the application's known dependencies, devices on which it is hosted, and any associated virtual dependencies inferred from usage patterns. The system then gathers the necessary data, including the usage metrics from all devices servicing the application directly or indirectly. These metrics might include performance data like CPU load, memory utilization, storage access, and power consumption for each device in the application's ecosystem. After compiling the relevant device usage data, the system generates the requested device usage list, which links each device to its respective role in supporting the application. This list may include both devices explicitly associated with the application and those involved through virtual dependencies, as well as the resource consumption attributed to each. Finally, the system presents this list to the user via the chosen interface, enabling the user to review the detailed resource usage of devices associated with the specific application.

At step 604, process 600 (e.g., using one or more components described above) determines a usage metric for a device. For example, the system may determine a first usage metric for a first device, wherein the first usage metric describes metadata related to one or more processes performed by the first device when servicing one or more of a plurality of applications.

In some embodiments, the system determines a usage metric for a device by monitoring and collecting performance data related to the device's operation as it services one or more applications. The system continuously tracks various key metrics such as CPU utilization, memory consumption, disk I/O, network bandwidth, and power usage, which are essential indicators of the device's overall activity. These metrics are often captured through performance monitoring tools or built-in device sensors that report real-time data on how resources are being used. For example, to determine a first usage metric for a specific device, the system collects metadata that describes the processes running on the device. This metadata includes details about the specific tasks being executed, the amount of computational power each task consumes, the duration of each process, and how much of the device's available resources are being allocated to different applications. The system can differentiate between these processes by linking them to individual applications or services, allowing it to attribute resource consumption to specific tasks or workloads. If the device is serving multiple applications, the system examines each process to determine how resources are divided among the applications, ensuring an accurate understanding of resource utilization. The first usage metric may, for instance, describe how much CPU time, memory, or network bandwidth is consumed by a particular process related to one application versus another. This granular tracking helps the system not only monitor device health and performance but also provide insights into how efficiently resources are being used to service multiple applications. By aggregating these metrics, the system can form a complete view of the device's usage patterns, which can then be used for optimization, reporting, or troubleshooting.

In some embodiments, the system may determine the most efficient subset of devices for serving an application by analyzing various factors such as the capabilities and specifications of available devices, their current availability, and the existing network configuration. This involves evaluating metrics like processing power, memory, battery life, and network connectivity of each device to ensure they can meet the application's requirements. The system also monitors application usage metrics, such as resource consumption patterns, response times, and load distribution, to identify inefficiencies. Based on this analysis, the system may recommend alternative devices that can perform tasks more efficiently or suggest optimized network arrangements to reduce latency and enhance performance. By leveraging dynamic resource allocation algorithms and real-time data, the system ensures optimal resource utilization and can adjust configurations proactively to meet changing demands, ultimately improving overall efficiency and user experience.

For example, the system may determine the availability of devices by actively monitoring their status through a combination of device-level reporting, network pings, and system logs. Devices may periodically send heartbeat signals or status updates indicating their readiness, resource levels, and operational state. Additionally, the system can query devices for specific details such as whether they are idle, in standby, or actively engaged in other tasks. To determine which devices are in use, the system analyzes task assignments, resource consumption patterns, and application activity logs, cross-referencing this information with device-specific metrics like CPU load, memory usage, and active processes.

To assess the network configuration, the system may collect data from routers, switches, and other network hardware, using network topology discovery protocols such as SNMP (Simple Network Management Protocol), LLDP (Link Layer Discovery Protocol), or proprietary APIs. It identifies the layout of the network, including connected devices, bandwidth availability, latency, and routing paths. By correlating these factors, the system creates a comprehensive view of the network and device landscape, enabling it to make informed decisions about resource allocation and optimization.

At step 606, process 600 (e.g., using one or more components described above) retrieves an application profile repository. For example, the system may retrieve, from an application profile repository, a first subset of application profiles corresponding to applications in a first application subset, wherein the application profile repository comprises a first set of application profiles corresponding to applications with known dependencies and a second set of application profiles corresponding to applications with virtual dependencies. In another example, the system may retrieve, from an application profile repository, a subset of application profiles of a plurality of application profiles, the subset of application profiles corresponding to respective applications of the plurality of applications, wherein the application profile repository comprises a first set of application profiles corresponding to applications of the plurality of applications with known dependencies and a second set of application profiles corresponding to applications of the plurality of applications with virtual dependencies.

In some embodiments, the system may generate the application profile repository by determining an application mapping for a first application subset, wherein the application mapping indicates relationships between a plurality of applications in the first application subset and populating an application profile repository based on the application mapping. For example, the system may analyze the relationships between the applications in the subset, identifying both direct and inferred dependencies. The application mapping visually and logically represents how the applications interact with each other, highlighting dependencies such as data exchanges, service calls, shared resources, or common network infrastructure. These relationships are represented as connections between the nodes, with each node corresponding to an individual application. Once the application mapping is established, the system uses it to populate the application profile repository. For each application in the mapping, the system creates a corresponding profile that includes detailed information about the application's dependencies, resource usage, and interactions with other applications or services. The system categorizes these profiles into two sets: the first set for applications with known dependencies, where the relationships are explicitly defined in the system architecture, and the second set for applications with virtual dependencies, where the relationships are inferred based on observed patterns of behavior, such as resource consumption or network traffic. For applications with known dependencies, the system extracts the relevant details from the mapping-such as which services or databases the application relies on-and records this information in the application profile. For applications with virtual dependencies, the system analyzes the mapping to identify indirect relationships or shared infrastructure, such as multiple applications accessing the same resource at similar times, and adds these inferred dependencies to the profiles.

In some embodiments, the system retrieves a first subset of application profiles corresponding to applications in a first application subset from an application profile repository by first identifying the relevant applications and their associated profiles. The application profile repository is structured to store two types of profiles: a first set for applications with known dependencies, and a second set for applications with virtual dependencies. When the system receives a request to retrieve the profiles of a specific subset of applications, it first consults the application mapping or dependency graph to determine which applications belong to the specified subset. These applications are then categorized based on whether their dependencies are explicitly defined (known dependencies) or inferred from usage patterns and metrics (virtual dependencies). The system may query the application profile repository for the corresponding profiles. For the applications with known dependencies, it retrieves profiles from the first set, which contain detailed information about the applications' direct interactions with other services, devices, and resources. For applications with virtual dependencies, the system retrieves profiles from the second set, which include inferred relationships, such as indirect interactions or shared resource usage that have been identified through analysis of operational metrics like network traffic, data access patterns, or temporal correlations. Once the system retrieves the relevant profiles from both sets, it combines them to form the first subset of application profiles, ensuring that both types of dependencies-known and virtual-are represented. This first subset of profiles is then used to analyze, monitor, or optimize the applications and their dependencies, enabling the system to provide insights or recommendations based on the complete view of how each application interacts with its environment.

In some embodiments, the system may populate the first set of application profiles corresponding to applications with known dependencies by determining for one or more of the applications with known dependencies a second application that is dependent on the one or more of the applications with known dependencies and recording, in a respective application profile in the first set of application profiles, the second application as a dependent application for the one or more of the applications with known dependencies. For example, the system populates the first set of application profiles corresponding to applications with known dependencies by systematically identifying and recording dependent applications based on the established relationships in the application mapping. The process begins with analyzing the known dependencies between applications, which are explicitly defined in the system's architecture. These dependencies might include API calls, direct service interactions, shared databases, or other resources that applications rely on to function. For each application in the first set of application profiles, the system determines which other applications depend on it by examining the application mapping's connections. For example, if Application A provides data to Application B via an API or shared resource, the system identifies Application B as a dependent of Application A. This determination is made by tracing the relationships in the mapping, where dependencies are visually represented as connections (or edges) between application nodes. The system identifies these connections and associates them with specific applications. Once the system determines that a second application (such as Application B) is dependent on a first application (such as Application A), it records this relationship in the respective profile of the first application in the repository. Specifically, it updates the application profile for Application A by listing Application B as a dependent application. This record includes details about the type of dependency, such as whether it involves data exchange, service invocation, or shared resource usage. This step ensures that the application profile for Application A reflects all known dependencies and relationships, providing a clear understanding of which applications rely on it. By repeating this process for all applications with known dependencies, the system completes the first set of application profiles, which now contain comprehensive information about each application's direct relationships with other applications. These profiles serve as a key resource for understanding the interdependencies within the system, enabling better resource management, performance tuning, and failure analysis by highlighting how different applications are interconnected. The profiles are updated dynamically as new dependencies are identified or existing ones evolve, ensuring that the information remains current and relevant.

In some embodiments, the system may populate the second set of application profiles corresponding to applications with virtual dependencies by determining a known application has unknown dependencies, in response to determining that known application has unknown dependencies, determining a type of the known application, determining one or more of the applications with known dependencies that corresponds to the type, determining a virtual dependency for the known application based on a known dependency of one or more of the applications with known dependencies that corresponds to the type, and recording, in a respective application profile in the second set of application profiles, the virtual dependency for the known application.

In some embodiments, the system populates the second set of application profiles corresponding to applications with virtual dependencies by first identifying situations where a known application has unknown dependencies-instances where the application's interactions or resource usage patterns suggest dependencies that are not explicitly defined. This determination is typically made through monitoring the application's behavior, such as unexpected patterns in resource consumption, network traffic, or shared resource access that indicate the presence of dependencies beyond those documented in the system's architecture. Once the system identifies that a known application has unknown dependencies, it proceeds by determining the type of the known application. This type could refer to the application's function, such as whether it is a database, a web server, or a microservice, as well as its role within the larger system (e.g., whether it handles data processing, storage, or communication). The system uses this type of classification to search for similar applications in the first set of application profiles-the profiles of applications with known dependencies. By identifying one or more applications that correspond to the same type as the known application, the system can leverage the dependency patterns already documented for those applications. The system then analyzes the known dependencies of these similar applications to infer possible virtual dependencies for the known application with unknown dependencies. For example, if other applications of the same type rely on a particular database, service, or API, the system may infer that the known application also shares this dependency, even if it has not been explicitly defined. This inference is based on patterns observed in the interactions of similar applications and resource usage, assuming that applications of the same type are likely to follow comparable dependency patterns. After determining the virtual dependency for the known application, the system updates the respective application profile in the second set of application profiles, recording this inferred relationship. The profile now reflects the virtual dependency, including relevant details such as the type of dependency (e.g., shared database access, API call, network service) and the source from which this dependency was inferred. By doing so, the system captures the implicit or hidden relationships that may impact the known application's performance or resource usage, even though they are not formally defined in the system architecture. This approach allows the system to continuously improve its understanding of the application landscape, identifying potential dependencies that could affect resource management, performance optimization, and troubleshooting efforts. The second set of profiles provides a more dynamic and flexible view of the application ecosystem, ensuring that unknown or inferred dependencies are recognized and considered in system-wide analysis and decision-making processes.

In some embodiments, the system populates the second set of application profiles corresponding to applications with virtual dependencies by determining a known application has unknown dependencies, in response to determining that known application has unknown dependencies, determining a function performed by the known application, determining one or more of the applications with known dependencies that perform the function, determining a virtual dependency for the known application based on a known dependency of one or more of the applications with known dependencies that perform the function, and recording, in a respective application profile in the second set of application profiles, the virtual dependency for the known application. For example, the system analyzes the known dependencies of the similar applications. Based on these dependencies, the system can infer a virtual dependency for the known application. For example, if the other data processing services rely on a specific database, messaging service, or API, the system may infer that the known application also depends on those resources, even though this relationship has not been explicitly defined. This inference is based on functional similarities, where the system assumes that applications performing the same tasks are likely to share resource or service dependencies. After determining this virtual dependency, the system records it in the respective profile of the known application within the second set of application profiles. The virtual dependency is logged along with details about the inferred relationship, such as the type of service, database, or resource that the application likely depends on. This information becomes part of the application's profile, expanding the system's understanding of the application's interactions and potential points of failure or optimization. By populating the second set of profiles in this way, the system continuously enhances its representation of the network of applications, ensuring that inferred or hidden dependencies are acknowledged and available for analysis. These profiles help optimize resource allocation, monitor performance, and anticipate potential issues by considering not only explicit dependencies but also inferred virtual ones based on the functions the applications perform.

In some embodiments, the system may generate the application profile repository by determining an application mapping for a first application subset, the first application subset including the plurality of applications, wherein the application mapping indicates relationships between or among the plurality of applications and populating an application profile repository with the plurality of application profiles based on the application mapping. For example, the system may generate the application profile repository by analyzing and determining the relationships and interdependencies among a subset of applications, referred to as the first application subset. This process begins with the identification of the applications included in the subset and the collection of metadata about their behaviors, resource requirements, and interactions. The system performs an application mapping, which identifies relationships such as data exchange, functional dependencies, shared resource utilization, or hierarchical task flows between or among the applications. To create this mapping, the system may leverage data from logs, APIs, dependency manifests, or runtime monitoring of the applications in operation. Using this information, the system constructs detailed profiles for each application, encapsulating characteristics like resource consumption, performance benchmarks, interconnectivity requirements, and priority levels. These profiles are then organized and stored in the application profile repository, a structured database that allows for quick retrieval and reference. The repository enables efficient resource allocation, dependency resolution, and optimization of application deployments by providing a comprehensive view of the application ecosystem and their interconnected roles.

At step 608, process 600 (e.g., using one or more components described above) determines an output based on the usage metric and one or more application profiles from the application profile repository. For example, the system may determine, based on inputting the first usage metric into a first model, a first output, wherein the first model is trained to generate application-specific device usage lists for respective applications based on inputted usage metrics for one or more devices and respective application profiles, from the application profile repository, for the respective applications. In another example, the system determines, based on the subset of application profiles and as a result of inputting the first usage metric into a first model, a first output , wherein the first model is trained to generate application-specific device usage lists for the respective applications based on both inputted usage metrics for one or more devices associated with one or more of the respective applications and respective application profiles of the plurality of application profiles associated with the one or more of the respective applications.

**In** some embodiments, the system determines a first output by inputting the first usage metric into a first model, which has been trained to generate application-specific device usage lists based on inputted usage metrics for one or more devices and corresponding application profiles from the application profile repository. The process begins by feeding the first usage metric-such as CPU, memory, disk I/O, or network bandwidth-into the model. This usage metric reflects the performance and resource consumption data of a specific device while it services one or more applications. The model has been trained on historical data that includes various usage metrics and their relationships to specific applications and devices. It understands how certain usage patterns map to specific applications based on their behavior, dependencies, and resource consumption. In addition to the usage metric, the model retrieves the relevant application profiles from the application profile repository. These profiles contain key information about each application's known and virtual dependencies, including which devices and resources they typically interact with, what kinds of processes they run, and how much of the device's resources they tend to consume. By combining the inputted usage metric with the data from the application profiles, the model processes this information to generate a first output. This output is an application-specific device usage list that specifies which devices are being used to support the respective applications and how much of each device's resources are allocated to each application. The model analyzes the usage patterns to determine which portion of the device's consumption is attributable to each application, providing a clear, detailed list of how the device's resources are being distributed among the applications it services. This allows for a deeper understanding of application performance, resource allocation, and potential areas for optimization across the network.

In some embodiments, the system may determine, based on inputting the first usage metric into the first model, the first output by determining a second usage metric for a second device, determining a usage profile based on the first usage metric and the second usage metric, and matching the usage profile to the first application based on a first application profile for the first application. For example, the system may determine the first output by inputting the first usage metric into the first model and following a structured process to analyze and match the usage data with a specific application. First, the system collects the first usage metric for a first device, which could include data such as CPU usage, memory consumption, disk I/O, or network traffic, reflecting the resource consumption of the device as it services one or more applications. Simultaneously, the system determines a second usage metric for a second device. This second usage metric captures similar resource usage information from the second device as it handles its respective application workload. Once both metrics are collected, the system combines the first and second usage metrics to create a usage profile. This profile provides a comprehensive view of resource utilization patterns across the devices, potentially highlighting common behaviors, peaks in resource consumption, or synchronized activities that may indicate shared application dependencies or workflows. The usage profile is an aggregation of the device metrics that summarizes how resources are consumed across different components of the infrastructure while serving applications. The next step involves matching this usage profile to a specific application by comparing it against application profiles stored in the system's application profile repository. The system references the first application profile for the first application, which contains known and virtual dependencies, typical resource consumption patterns, and expected performance characteristics. By analyzing and comparing the usage profile with the data in the first application profile, the system can detect patterns or resource consumption behaviors that align with those of the first application. If the usage profile closely matches the resource usage patterns and dependencies described in the first application profile, the system determines that the first output corresponds to the first application. This output might include details such as which devices are servicing the application, how much of the resource consumption is attributable to the application, and whether the observed usage is within expected ranges. This process enables the system to efficiently associate resource usage with specific applications, ensuring accurate monitoring, performance analysis, and potential optimization recommendations.

At step 610, process 600 (e.g., using one or more components described above) generates the application-specific device usage list based on the output. For example, the system may generate for display, on a user interface, the first application-specific device usage list based on the first output.

In some embodiments, the system generates for display, on a user interface, the first application-specific device usage list based on the first output by formatting the data into a clear and accessible layout that users can easily interpret. After the model processes the inputted usage metrics and application profiles to produce the first output-an application-specific device usage list-the system organizes the data into a structured format. This list includes details about each device's resource consumption, such as CPU, memory, disk I/O, and network usage, and attributes these metrics to specific applications that the devices are servicing. The system then translates this data into a visual representation suitable for the user interface, ensuring that each component is easy to navigate and understand. The list typically includes columns or sections showing the names of the devices, the applications associated with each device, and the corresponding usage metrics. It might also include graphical elements, such as charts or progress bars, to visually represent the proportion of resources consumed by each application on a given device, helping users quickly grasp how resources are distributed. Once the data is organized and formatted, the system sends it to the user interface for display. The user can interact with the display to filter, sort, or drill down into more detailed information, such as focusing on specific devices, applications, or time ranges. This interactive display allows users to gain insights into the resource usage patterns of their applications, identify potential performance issues, and make informed decisions about resource allocation and optimization. The interface is designed to be user-friendly, ensuring that the technical data is presented in a way that is both informative and actionable.

In some embodiments, the system may determine, based on the first application-specific device usage list, a first device for processing the first application and generate a recommendation for using the first device for processing the first application. For example, the system may determine the most suitable first device for processing a specific application by analyzing the first application-specific device usage list, which contains detailed information about the devices that can support the application. This list typically includes device capabilities such as processing power, memory capacity, storage, network connectivity, and any specialized hardware requirements specific to the application. The system compares the application's resource demands-such as computational workload, latency sensitivity, and input/output requirements-against the capabilities of each device on the list. Using algorithms that evaluate performance metrics, resource availability, and device proximity within the network, the system identifies the device best suited for processing the application. Factors like current device workload, energy efficiency, and the expected impact on network performance are also considered. Once the optimal device is determined, the system generates a recommendation, specifying the first device for processing the application. This recommendation may also include justification, such as how the selected device meets the application's requirements and offers improved performance or efficiency compared to alternatives. By automating this process, the system ensures effective allocation of resources and optimal performance for the application.

In some embodiments, the system may determine, based on the first application-specific device usage list, a first device or a second device for processing the first application, determine a first usage metric processing the first application with the first device, determine a second usage metric processing the first application with the second device, and generate a recommendation for using the first device based on comparing the first usage metric and the second usage metric. For example, the system may determine the most suitable device for processing an application by evaluating the options presented in the first application-specific device usage list, which outlines devices capable of supporting the application. The system begins by selecting a first device and a second device from the list and calculating a usage metric for each. These metrics are derived by simulating or analyzing how the application performs on each device, considering factors such as processing time, resource consumption (e.g., CPU, memory, or battery usage), latency, and the impact on other ongoing processes or the broader network. The first usage metric is determined by assessing how efficiently the first device handles the application's workload, while the second usage metric is calculated similarly for the second device. The system then compares these metrics to identify which device offers better performance or efficiency. For example, if the first device processes the application faster with lower energy consumption and minimal network impact, its usage metric will be more favorable. Based on this comparison, the system generates a recommendation to use the first device if its metrics are superior. This recommendation ensures that resource allocation optimizes application performance while maintaining overall system efficiency.

In some embodiments, the system may determine, based on the first application-specific device usage list, a first device currently being used to process the first application and generate a recommendation to switch from the first device to a second device. For example, the system may determine whether to recommend switching from a first device currently processing an application to a second device by analyzing the first application-specific device usage list, which outlines devices capable of supporting the application. The system begins by monitoring the performance of the first device while it processes the application, gathering real-time data such as resource utilization (e.g., CPU, memory, energy), application response times, and network impact. Simultaneously, the system evaluates the second device's availability and potential performance using metrics from the usage list, such as its current workload, processing capabilities, and suitability for the application's requirements. The system compares the current performance of the first device with the projected performance of the second device. If the second device is determined to offer significant advantages-such as reduced processing time, lower energy consumption, better network efficiency, or improved application stability-the system generates a recommendation to switch. The recommendation may also consider factors like the cost of switching, potential downtime, or disruption to ongoing processes. By continuously evaluating device performance and resource efficiency, the system ensures optimal application processing while adapting dynamically to changing conditions.

**In** some embodiments, the system may determine, based on the first application-specific device usage list, a first device for processing the first application, determine a first usage metric processing the first application with the first device, and compare the first usage metric to a threshold metric. For example, the system may determine the most suitable device for processing an application by referencing the first application-specific device usage list, which outlines devices capable of supporting the application. From this list, the system identifies a first device whose specifications match the application's resource and performance requirements, such as processing power, memory, and network connectivity. Once the first device is selected, the system evaluates its performance in handling the application by calculating a first usage metric. This metric may include factors such as CPU and memory utilization, processing time, power consumption, and latency during the application's execution. The system then compares this first usage metric against a predefined threshold metric, which represents the acceptable performance standard for processing the application. The threshold metric is typically defined based on application-specific requirements, such as minimum performance levels, energy efficiency targets, or latency limits. If the first usage metric meets or exceeds the threshold, the system confirms the suitability of the first device for processing the application. Conversely, if the metric falls below the threshold, the system may recommend alternative devices or configurations to ensure the application's requirements are met. This process ensures that device selection and resource allocation are optimized for performance and efficiency.

It is contemplated that the steps or descriptions of FIG. 6 may be used with any other embodiment of this disclosure. In addition, the steps and descriptions described in relation to FIG. 6 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 6.

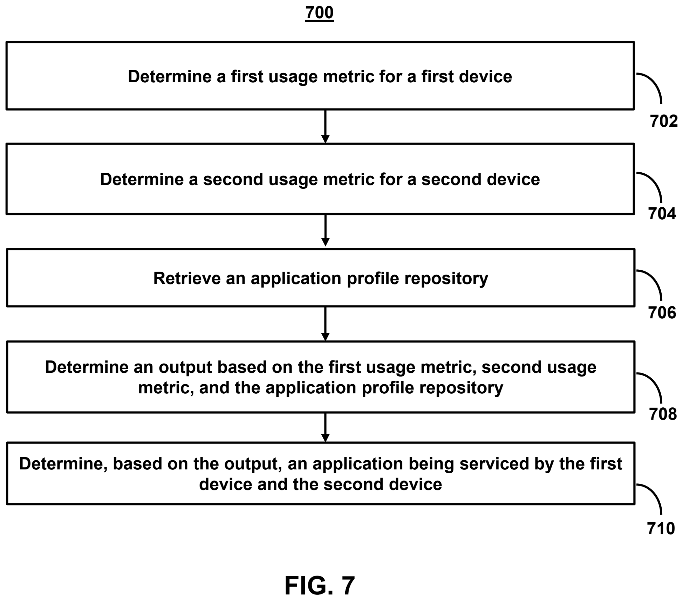

FIG. 7 shows a flowchart of the steps involved in generating recommendations for network arrangements, in accordance with one or more embodiments. For example, in some embodiments, process 700 may describe one or more steps for providing application-level insights for devices or network arrangements comprising applications with unknown dependencies.

At step 702, process 700 (e.g., using one or more components described above) determines a first usage metric for a first device. For example, the system may determine a first usage metric for a first device, wherein the first usage metric describes first metadata related to a first process performed by the first device when servicing one or more of a plurality of applications.

In some embodiments, the system determines a first usage metric for a first device by monitoring and analyzing the operational performance of the device as it services one or more applications. The system collects real-time data from the device's hardware sensors or through software agents that track resource usage such as CPU utilization, memory consumption, disk I/O, and network bandwidth. This data, which reflects the ongoing processes running on the device, is used to compute specific metrics that indicate how much of the device's resources are being consumed by different applications. For example, the system may determine a first usage metric that describes metadata related to a first process performed by the device. This metadata could include details such as the process ID, the amount of CPU time the process has used, memory allocated to the process, the duration of execution, and the I/O operations performed by the process. The system links this process to the application or applications it is servicing, allowing it to attribute the resource consumption to the relevant application. By continuously collecting and analyzing this data, the system can provide a detailed understanding of the device's resource usage patterns. This first usage metric offers insight into how the device's resources are being allocated across multiple applications, helping the system optimize performance, identify bottlenecks, or predict future resource needs. This process enables the system to efficiently manage resources in multi-application environments, ensuring that each application receives the necessary resources while maintaining overall system health and performance.

At step 704, process 700 (e.g., using one or more components described above) determines a second usage metric for a second device. For example, the system may determine a second usage metric for a second device, wherein the second usage metric describes second metadata related to a second process performed by the second device when servicing one or more of the plurality of applications.

**In** some embodiments, the system determines a second usage metric for a second device by monitoring the device's performance and capturing specific data related to the processes it executes while servicing one or more applications. Similar to the process for determining the first usage metric, the system collects real-time operational data from the second device's hardware sensors or performance monitoring tools. This data includes resource usage metrics such as CPU utilization, memory usage, disk input/output (I/O) activity, and network bandwidth. For the second usage metric, the system focuses on metadata related to a second process being performed by the second device. This second process metadata could include key details like the process ID, CPU cycles consumed, memory allocated, the duration of the process execution, and any I/O operations related to storage or network communications. The system analyzes these metrics to understand the resource consumption linked to the second process and correlates this with the applications it is servicing. By mapping the second process to the specific applications being serviced by the second device, the system attributes the resource usage to those applications, creating a clear picture of how the second device's resources are distributed. This second usage metric helps the system track and manage the overall load on the second device, ensuring that resources are effectively allocated across the applications. It also aids in identifying performance bottlenecks, forecasting future resource needs, and optimizing device utilization in multi-application environments.

At step 706, process 700 (e.g., using one or more components described above) retrieves an application profile repository. For example, the system may retrieve, from an application profile repository, a first subset of application profiles corresponding to applications in a first application subset, wherein the application profile repository comprises a first set of application profiles corresponding to applications with known dependencies and a second set of application profiles corresponding to applications with virtual dependencies.

**In** some embodiments, the system retrieves an application profile repository by querying a centralized database or storage system that contains detailed information about the various applications running across the network. The repository is organized into profiles, each of which contains key information about a specific application, such as its dependencies, resource requirements, and interactions with other applications and devices. The repository is typically segmented into different sets of profiles: a first set corresponds to applications with known dependencies (those with explicitly defined interactions, such as direct API calls or shared databases), and a second set corresponds to applications with virtual dependencies (those with inferred or indirect relationships, such as resource usage patterns or common infrastructure services). To retrieve a specific subset of application profiles, the system starts by identifying the relevant applications based on a request. For example, if the system needs to retrieve profiles for a first application subset, it queries the repository to find the profiles associated with those applications. The system may use identifiers such as application names, IDs, or tags to filter the relevant profiles from the repository. Once the system identifies the appropriate applications, it retrieves their corresponding profiles from the two sets: the first set contains profiles with explicit dependency information, while the second set includes profiles where dependencies are inferred from usage patterns, such as shared network resources or simultaneous data access. The system then compiles these profiles into a structured subset, ready for further analysis or display. This subset can be used to generate insights into resource usage, optimize dependencies, or improve application performance across the network. By accessing both known and virtual dependencies, the system ensures a comprehensive view of how applications interact within the larger ecosystem.

At step 708, process 700 (e.g., using one or more components described above) determines an output based on the first usage metric, second usage metric, and the application profile repository. For example, the system may determine, based on inputting the first usage metric and the second usage metric into a first model, a first output, wherein the first model is trained to determine applications being serviced based on comparisons of inputted usage metrics for one or more devices and the first subset of application profiles.

**In** some embodiments, the system may determine, based on the first output, a first portion of the first usage metric corresponding to the first application by determining, based on the first output, a second portion of a second usage metric for a second device and determining a power consumption prediction based on the first portion and the second portion. A system determines a first portion of the first usage metric corresponding to the first application by analyzing the first output, which indicates the application being serviced and its resource usage patterns. Once the system has identified the first application from the first output, it isolates the first portion of the first usage metric (e.g., CPU utilization, memory consumption, or disk I/O) that directly correlates with the resource consumption of the first application on the first device. This process involves calculating how much of the device's total resource usage is attributable to the first application, based on metrics like the percentage of processing time or memory allocated specifically for that application. Simultaneously, the system analyzes the resource usage on a second device that is also involved in servicing the first application, determining a second portion of the second usage metric for this device. This second portion represents the resource consumption on the second device that is dedicated to the first application. The system uses similar methods, such as analyzing process-level resource usage and application-to-device mapping, to determine what percentage of the second device's resources are being consumed by the first application. With both the first and second portions of the usage metrics isolated, the system calculates a power consumption prediction by aggregating the resource usage across the two devices. Power consumption models, which link resource utilization (e.g., CPU or memory) to energy consumption, are applied to estimate how much power is being used by the first application on each device. The system uses this data to generate a total power consumption prediction, factoring in the first portion of the first device's usage and the second portion of the second device's usage, resulting in a precise estimate of the energy footprint of the first application across multiple devices. This enables the system to track energy consumption at the application level, which is useful for optimizing power usage, cost efficiency, and environmental impact in distributed computing environments.

At step 710, process 700 (e.g., using one or more components described above) determines, based on the output, an application being serviced by the first device and the second device. For example, the system may determine, based on the first output, a first application being serviced by the first device and the second device.

**In** some embodiments, the system determines an output based on the first usage metric, second usage metric, and the application profile repository by inputting the collected metrics into a trained model that can identify which applications are being serviced by the respective devices. The process begins by gathering the first usage metric from the first device and the second usage metric from the second device, both of which include performance data such as CPU usage, memory consumption, network bandwidth, or disk I/O related to the processes running on those devices. These usage metrics provide detailed insights into how each device's resources are being utilized. The system then inputs these metrics into a first model that has been trained to correlate device resource usage with specific applications. This model relies on historical data and patterns of resource consumption associated with different applications. The model also references the application profile repository, which contains a first subset of application profiles. These profiles include detailed information about the applications, such as known and virtual dependencies, resource requirements, and typical usage patterns. By comparing the inputted usage metrics with the data in the application profiles, the model is able to determine which applications are being serviced by the first and second devices. The model evaluates the similarities between the resource usage patterns described by the metrics and the usage characteristics in the profiles. For example, if an application in the profile repository typically consumes a certain amount of CPU and memory during specific operations, and the first usage metric from the device matches this pattern, the model can infer that the application is being serviced by that device. The system then generates the first output, which specifies the applications that are being serviced by the first and second devices. This output includes a detailed breakdown of resource usage across the devices, indicating how much of each device's resources are allocated to each application. This information can be used for optimizing resource allocation, balancing workloads, or monitoring the health and performance of applications within the network. By leveraging both the usage metrics and the application profile repository, the system provides a comprehensive view of how applications interact with devices in the environment.

It is contemplated that the steps or descriptions of FIG. 7 may be used with any other embodiment of this disclosure. In addition, the steps and descriptions described in relation to FIG. 7 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 7.

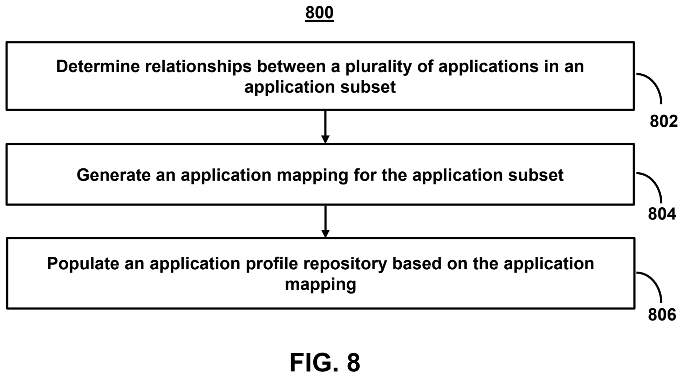

FIG. 8 shows a flowchart of the steps involved in populating an application profile repository, in accordance with one or more embodiments. For example, in some embodiments, process 800 may describe one or more steps for providing application-level insights for devices or network arrangements comprising applications with unknown dependencies.

At step 802, process 800 (e.g., using one or more components described above) determines relationships between a plurality of applications in an application subset. For example, the system may determine relationships between a plurality of applications in the first application subset.

In some embodiments, the relationships between a plurality of applications in an application subset that may indicate dependencies can take several forms, ranging from direct, explicit interactions to indirect, inferred connections. One of the most common types of dependency is data flow dependency, where one application relies on data produced or processed by another application. For instance, a front-end application may depend on a back-end service to fetch user information or process transactions, creating a direct data dependency. Similarly, applications may share access to common resources, such as databases or file storage systems, indicating a resource dependency. If multiple applications frequently access the same database, their performance can be interdependent based on database availability or throughput. Another type of relationship is service dependency, where one application invokes the functionality of another, such as in a microservice architecture where applications call other services to execute specific functions like authentication, payment processing, or messaging. In these cases, the applications are functionally intertwined, and the unavailability or failure of one service can directly impact the dependent applications. Execution order and timing dependencies may also be used. Applications might need to execute in a specific sequence or adhere to a particular schedule. For example, a batch processing application may need to wait for another application to complete a task before it can proceed, creating a temporal or workflow dependency. Additionally, inferred or virtual dependencies can be identified by examining patterns of interaction, such as applications that frequently access the same network resources, share similar processing timelines, or generate simultaneous load on infrastructure. These patterns may not reflect direct interactions between the applications but suggest an underlying relationship, like shared hardware, load balancing, or common service endpoints. By analyzing these relationships, the system can map out both explicit and implicit dependencies between applications, which are critical for optimizing resource management, improving fault tolerance, and ensuring smooth orchestration in distributed computing environments. Understanding these dependencies enables better decision-making when scaling, troubleshooting, or restructuring the architecture of interconnected applications.

At step 804, process 800 (e.g., using one or more components described above) generates an application mapping for the application subset. For example, the system may generate the application mapping, wherein each of the plurality of applications is represented by respective nodes in the application mapping, wherein the respective nodes comprise a first node subset and a second node subset. For example, the first node subset comprises nodes with respective known dependencies. Additionally, or alternatively, the second node subset comprises nodes with respective virtual dependencies. The respective virtual dependencies may be inferred based on the relationships between the plurality of applications and the respective known dependencies.

In some embodiments, the system may generate an application mapping by first identifying and representing each of the plurality of applications as nodes in the mapping. These nodes are then categorized into two subsets: a first node subset representing applications with known dependencies and a second node subset representing applications with virtual dependencies. The known dependencies are explicitly defined relationships between applications, such as direct data exchanges, API calls, shared databases, or service interactions. These are captured by the system through configuration files, service registries, or dependency graphs that describe how applications interact with each other. For each application with known dependencies, the system creates a corresponding node in the first node subset and connects it to other nodes that represent the applications or services it depends on. In parallel, the system works to identify virtual dependencies, which are inferred relationships between applications based on observed behaviors or usage patterns, rather than explicitly defined links. The system collects data such as resource usage, timing correlations, shared network traffic, or simultaneous access to common infrastructure (e.g., databases, storage systems, or third-party services). For example, if two applications frequently access the same database or exhibit similar processing patterns, the system may infer a virtual dependency between them, even though they do not directly interact. These inferred relationships are represented as nodes in the second node subset. To build the complete application mapping, the system integrates both subsets. The first node subset establishes the known, explicit dependencies between applications, forming a foundational structure for the map. The second node subset adds complexity by highlighting inferred dependencies that may not be immediately apparent from the application's architecture but emerge from operational data. The system connects these nodes, creating edges that represent both direct interactions and virtual dependencies, allowing for a comprehensive view of how applications relate to and depend on one another. This mapping is then used to visualize and manage the application ecosystem, helping administrators understand both explicit and hidden dependencies, optimize resource allocations, mitigate potential bottlenecks, and improve overall system resilience. The dynamic nature of virtual dependencies means the system can continuously update the mapping as new patterns emerge, ensuring that the application landscape reflects both structural and behavioral relationships.

At step 806, process 800 (e.g., using one or more components described above) populates an application profile repository based on the application mapping. For example, the system may A system populates an application profile repository based on the application mapping by systematically extracting and organizing the relevant information about each application's dependencies and interactions from the mapping. The application mapping, which represents applications as nodes and highlights both known and virtual dependencies, serves as the foundational structure from which the system derives detailed profiles for each application. For each application in the mapping, the system generates an application profile that includes key metadata such as the application's resource requirements, dependencies (both known and inferred), communication patterns, and the devices or services it interacts with.

To populate the repository, the system first identifies the applications from the mapping's first node subset, which contains nodes representing applications with known dependencies. It captures explicit details such as API calls, data flow paths, shared resources, and service-to-service interactions, organizing this information into the respective application profiles. These profiles include precise information about the other applications or services that each application depends on and the specific type of interactions involved, such as data queries, authentication calls, or network communication. The system may process the second node subset, which represents applications with virtual dependencies. For these applications, the system infers relationships based on patterns observed in resource usage, network traffic, or time-based correlations. It integrates this inferred data into the profiles by identifying how the application might rely on shared infrastructure or exhibit synchronized behavior with other applications, even if there are no direct interactions. These virtual dependencies are added to the profile as inferred relationships, providing a more dynamic and flexible view of the application's operational environment. Once the information is gathered, the system stores these profiles in the application profile repository, ensuring that each profile is regularly updated as the application mapping evolves. The repository becomes a centralized resource for understanding the behavior and dependencies of applications within the network, allowing the system to use these profiles for tasks like resource optimization, dependency management, fault detection, and performance tuning. This approach enables administrators to have a holistic, up-to-date view of how applications interact and rely on one another, both through explicit and inferred connections.

In some embodiments, the system may determine respective power consumption predictions for each device on the first application-specific device usage list and determine a composite power consumption prediction based on aggregating each of the respective power consumption predictions. A system determines respective power consumption predictions for each device on the first application-specific device usage list by analyzing the resource usage of each device and applying power consumption models that estimate energy usage based on that data. For each device listed as servicing the first application, the system collects usage metrics such as CPU load, memory usage, disk I/O, and network activity, which represent the operational footprint of the device while supporting the application. These metrics are input into power consumption models that calculate how much energy is being consumed by the device in relation to the resources allocated to the first application. The models account for device-specific characteristics, such as hardware efficiency, thermal design, and power states, to provide an accurate prediction of the power used by each device while handling the application's workload. Once the system has determined the respective power consumption prediction for each device on the list, it proceeds to calculate a composite power consumption prediction by aggregating the individual power predictions. This aggregation involves summing the energy consumption estimates from all devices servicing the application, providing a total power consumption estimate for the entire infrastructure supporting that application. By aggregating these predictions across multiple devices, the system can offer a holistic view of the total energy impact of running the application, which can be used for optimizing energy efficiency, managing operational costs, or planning for sustainability initiatives. This composite power consumption prediction helps in understanding the overall energy footprint of the application, particularly in environments with distributed or cloud-based architectures.

In some embodiments, the system may compare the composite power consumption prediction to a threshold composite power consumption prediction and determine to use one or more devices on the first application-specific device usage list based on comparing the composite power consumption prediction to the threshold composite power consumption prediction. For example, the system may compare the composite power consumption prediction to a threshold composite power consumption prediction by first calculating the total estimated energy usage for all devices supporting the first application. This composite power consumption prediction represents the cumulative energy consumption across the multiple devices on the application-specific device usage list. The system then retrieves a threshold composite power consumption prediction, which could be predefined based on energy efficiency goals, cost management strategies, or system performance requirements. This threshold serves as a reference point for acceptable energy consumption levels for running the application. The system compares the composite power consumption prediction to this threshold. If the total predicted power consumption exceeds the threshold, it indicates that the current resource allocation may be inefficient or unsustainable in terms of energy usage. Based on this comparison, the system determines whether to continue using the same set of devices or to take action to optimize power consumption. To reduce energy usage, the system may decide to reallocate the application workload across a different set of devices, choosing more energy-efficient hardware or shifting the load to underutilized devices with lower power consumption. Alternatively, the system might consider scaling down certain devices, reducing their resource allocation, or migrating parts of the application to cloud services with dynamic power scaling capabilities. The system makes these decisions by evaluating each device's energy efficiency and capacity to meet performance needs while minimizing power consumption. If the composite power consumption prediction is below or close to the threshold, the system may decide to maintain the current device configuration, as it falls within acceptable energy limits. In this way, the system optimizes resource usage by balancing performance requirements with energy consumption, ensuring that applications run efficiently without exceeding predefined power consumption thresholds.

It is contemplated that the steps or descriptions of FIG. 8 may be used with any other embodiment of this disclosure. In addition, the steps and descriptions described in relation to FIG. 8 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 8.

The above-described embodiments of the present disclosure are presented for purposes of illustration and not of limitation, and the present disclosure is limited only by the claims that follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method for providing network arrangements for devices with non-homogenous or unknown specifications based on power consumption for selected applications.
2. The method of any one of the preceding embodiments, further comprising: generating a network mapping for a first network, wherein the network mapping indicates relationships between a plurality of devices in the first network, and wherein each of the plurality of devices is represented by respective nodes in the network mapping, wherein the respective nodes comprise a first node subset and a second node subset, wherein the first node subset comprises nodes with respective known specifications, wherein the respective known specifications are based on respective vendor information, respective model information, respective serial number information, or respective geographical location information, wherein the second node subset comprises nodes with respective virtual specifications, and wherein the respective virtual specifications are inferred based on the relationships between the plurality of devices and the respective known specifications; and populating a device profile repository based on the network mapping.
3. The method of any one of the preceding embodiments, further comprising: receiving a first user request to generate a first network arrangement of a plurality of devices for a first application across a first network; determining a first usage metric for the first application, wherein the first usage metric requirement describes required metadata related to one or more processes performed by the first application; determining, from the plurality of devices, a plurality of subsets of devices for serving the first application; retrieving, from a device profile repository, respective device profiles corresponding to devices on the first network, wherein the device profile repository comprises a first set of device profiles corresponding to devices with known specifications and a second set of device profiles corresponding to devices with virtual specifications; determining, using a first model, a first output, wherein the first model is trained to generate application-specific power consumption predictions for respective applications based on inputted usage metrics for the respective applications and respective device profiles, from the device profile repository, for devices serving the respective applications; and generating for display, on a user interface, the recommendation based on the first output.
4. The method of any one of the preceding embodiments, wherein generating the device profile repository further comprises: retrieving an aggregate carbon impact for a first device and a second device; retrieving a first device profile for the first device, wherein the first device profile is based on a first known specification; determining a first component carbon impact for the first device based on the first known specification; determining a difference between the first component carbon impact and the aggregate carbon impact; determining a second component carbon impact for the second device based on the difference; and determining a second virtual specification for the second device based on the second component carbon impact.
5. The method of any one of the preceding embodiments, wherein generating the device profile repository further comprises: retrieving an aggregate processing metric for a first device and a second device; retrieving a first device profile for the first device, wherein the first device profile is based on a first known specification; determining a first component processing metric for the first device based on the first known specification; determining a difference between the first component processing metric and the aggregate processing metric; determining a second processing metric for the second device based on the difference; and determining a second virtual specification for the second device based on the second processing metric.
6. The method of any one of the preceding embodiments, wherein generating the device profile repository further comprises: retrieving a network mapping for the first network, wherein the network mapping indicates relationships between the plurality of devices, and wherein each of the plurality of devices is represented by respective nodes in the network mapping; identifying a first node subset of the respective nodes, wherein the first node subset comprises nodes with respective known specifications; generating a known network mapping based on populating the network mapping at each node of the first node subset with the respective known specifications; identifying a second node subset of the respective nodes, wherein the second node subset comprises nodes with respective unknown specifications, and wherein the second node subset comprises unpopulated nodes in the known network mapping; and inferring respective virtual specifications for each node in the second node subset based on the relationships between the plurality of devices and the respective known specifications in the known network mapping.
7. The method of any one of the preceding embodiments, wherein determining the first usage metric for the first application further comprises: determining a first process performed by the first application; and determining a data volume created on a data array for consumption by the first application during the first process.
8. The method of any one of the preceding embodiments, wherein determining the first usage metric for the first application further comprises: determining a first process performed by the first application; and determining watt-hour power consumption by the first application during the first process.
9. The method of any one of the preceding embodiments, wherein determining the first usage metric for the first application further comprises: determining a first process performed by the first application; and determining a number of ports for switches dedicated to the first application during the first process.
10. The method of any one of the preceding embodiments, wherein determining the first usage metric for the first application further comprises: determining a first process performed by the first application; and determining a number of data arrays created for the first application during the first process.
11. The method of any one of the preceding embodiments, wherein determining the first subset of devices for serving the first application based on the first usage metric further comprises: determining a number of devices of the plurality of devices required by the first application based on the first usage metric; and determining the first subset of devices based on the number of devices.
12. The method of any one of the preceding embodiments, wherein determining the first subset of devices for serving the first application based on the first usage metric further comprises: determining a first process performed by the first application based on the first usage metric; and filtering the plurality of devices based on whether a respective device is utilized during the first process.
13. The method of any one of the preceding embodiments, wherein determining the first output further comprises: determining a carbon impact for serving the first application with the first subset; and determining the recommendation based on the carbon impact.
14. The method of any one of the preceding embodiments, wherein determining the recommendation based on the carbon impact further comprises: determining a power source for powering the first subset; determining carbon impact ratio for the power source; and adjusting the carbon impact based on the carbon impact ratio.
15. The method of any one of the preceding embodiments, wherein determining the power source for powering the first subset further comprises: determining a geographic location for the first subset; and determining the power source based on the geographic location.
16. The method of any one of the preceding embodiments, wherein determining the power source for powering the first subset further comprises: determining a network location for the first subset; and determining the power source based on the network location.
17. The method of any one of the preceding embodiments, wherein determining the first output further comprises: generating a first feature input, wherein the first feature input is based on the first application and the first subset of devices; and inputting the first feature input into the first model, wherein the first model comprises an artificial intelligence model.
18. The method of any one of the preceding embodiments, further comprising: retrieving a network mapping for a first network, wherein the network mapping indicates relationships between a plurality of devices, and wherein each of the plurality of devices is represented by respective nodes in the network mapping; identifying a first node subset of the respective nodes, wherein the first node subset comprises nodes with respective known specifications; generating a known network mapping based on populating the network mapping at each node of the first node subset with the respective known specifications; identifying a second node subset of the respective nodes, wherein the second node subset comprises nodes with respective unknown specifications, and wherein the second node subset comprises unpopulated nodes in the known network mapping; inferring respective virtual specifications for each node in the second node subset based on the relationships between the plurality of devices and the respective known specifications in the known network mapping; generating a device profile repository based on populating the known network mapping with the respective virtual specifications for each node in the second node subset; receiving a first user request to generate a first network arrangement of a plurality of devices for a first application across a first network; determining, from the plurality of devices, a first subset of devices for serving the first application; retrieving, from the device profile repository, a first subset of device profiles corresponding to devices in the first subset of devices; and generating for display, on a user interface, the recommendation based on the first subset of device profiles.
19. The method of any one of the preceding embodiments, further comprising: receiving a first user request to generate a first network arrangement of a plurality of devices for a first application across a first network; determining a first usage metric requirement for the first application, wherein the first usage metric requirement describes required metadata related to one or more processes performed by the first application; determining, from the plurality of devices, a plurality of subsets of devices for serving the first application; retrieving, from a device profile repository, respective device profiles corresponding to devices on the first network, wherein the device profile repository comprises a first set of device profiles corresponding to devices with known specifications and a second set of device profiles corresponding to devices with virtual specifications; determining, using a first model, a first output, wherein the first model is trained to generate respective application-specific power consumption predictions for the plurality of subsets of devices based on inputted usage metric requirements and the respective device profiles; selecting, from the plurality of subsets of devices, a first subset of devices for serving the first application based on the first output; and generating a recommendation for the first network arrangement based on the first subset of devices.
20. The method of any one of the preceding embodiments, wherein generating the device profile repository further comprises: retrieving an aggregate power consumption for a first device and a second device; retrieving a first device profile for the first device, wherein the first device profile is based on a first known specification; determining a first component power consumption for the first device based on the first known specification; determining a difference between the first component power consumption and the aggregate power consumption; determining a second component power consumption for the second device based on the difference; and determining a second virtual specification for the second device based on the second component power consumption.
21. The method of any one of the preceding embodiments, wherein generating the device profile repository further comprises: retrieving an aggregate processing metric for a first device and a second device; retrieving a first device profile for the first device, wherein the first device profile is based on a first known specification; determining a first component processing metric for the first device based on the first known specification; determining a difference between the first component processing metric and the aggregate processing metric; determining a second processing metric for the second device based on the difference; and determining a second virtual specification for the second device based on the second processing metric.
22. The method of any one of the preceding embodiments, wherein generating the device profile repository further comprises: retrieving a network mapping for the first network, wherein the network mapping indicates relationships between the plurality of devices, and wherein each of the plurality of devices is represented by respective nodes in the network mapping; identifying a first node subset of the respective nodes, wherein the first node subset comprises nodes with respective known specifications; generating a known network mapping based on populating the network mapping at each node of the first node subset with the respective known specifications; identifying a second node subset of the respective nodes, wherein the second node subset comprises nodes with respective unknown specifications, and wherein the second node subset comprises unpopulated nodes in the known network mapping; and inferring respective virtual specifications for each node in the second node subset based on the relationships between the plurality of devices and the respective known specifications in the known network mapping.
23. The method of any one of the preceding embodiments, wherein determining the first subset of devices for serving the first application based on the output further comprises: determining a device type of a plurality of device types required by the first application based on the first usage metric; and determining the first subset of devices based on the device type.
24. The method of any one of the preceding embodiments, wherein determining the first subset of devices for serving the first application based on the first output further comprises: determining a first process performed by the first application based on the first usage metric; and filtering the plurality of device types based on whether a respective device type is utilized during the first process.
25. The method of any one of the preceding embodiments, wherein determining the device type of the plurality of device types required by the first application based on the first usage metric further comprises: retrieving a first device taxonomy for the first network, wherein the first device taxonomy indicates required device types corresponding to different usage metrics; and determining, based on the first device taxonomy, that the device type corresponds to the first usage metric.
26. The method of any one of the preceding embodiments, wherein determining the device type of the plurality of device types required by the first application based on the first output further comprises: determining a taxonomy identifier based on the first application; and selecting the first device taxonomy from a plurality of device taxonomies based on the taxonomy identifier.
27. The method of any one of the preceding embodiments, wherein selecting the first subset of devices for serving the first application based on the first output further comprises: receiving a localization requirement for processing the first application; and determining the first subset meets the localization requirement.
28. The method of any one of the preceding embodiments, wherein selecting the first subset of devices for serving the first application based on the first output further comprises: receiving a technology stack requirement for processing the first application; and determining the first subset meets the technology stack requirement.
29. The method of any one of the preceding embodiments, wherein determining the first output further comprises: determining a power consumption for serving the first application with the first subset; and determining the recommendation based on the carbon impact.
30. The method of any one of the preceding embodiments, wherein determining the recommendation based on the carbon impact further comprises: determining a power source for powering the first subset; determining power consumption ratio for the power source; and adjusting the power consumption based on the power consumption ratio.
31. The method of any one of the preceding embodiments, wherein determining the power source for powering the first subset further comprises: determining a geographic location for the first subset; and determining the power source based on the geographic location.
32. The method of any one of the preceding embodiments, wherein determining the power source for powering the first subset further comprises: determining a network location for the first subset; and determining the power source based on the network location.
33. The method of any one of the preceding embodiments, wherein the application-specific power consumption predictions comprise multidimensional data.
34. A method for providing application-level insights for devices or network arrangements comprising applications with unknown dependencies.
35. The method of any one of the preceding embodiments, further comprising: receiving a first user request to generate a first application-specific device usage list for a first application; determining a first usage metric for a first device, wherein the first usage metric describes metadata related to one or more processes performed by the first device when servicing one or more of a plurality of applications; retrieving, from an application profile repository, a first subset of application profiles corresponding to applications in a first application subset, wherein the application profile repository comprises a first set of application profiles corresponding to applications with known dependencies and a second set of application profiles corresponding to applications with virtual dependencies; determining, based on inputting the first usage metric into a first model, a first output, wherein the first model is trained to generate application-specific device usage lists for respective applications based on inputted usage metrics for one or more devices and respective application profiles, from the application profile repository, for the respective applications; and generating for display, on a user interface, the first application-specific device usage list based on the first output
36. The method of any one of the preceding embodiments, wherein the first set of application profiles corresponding to applications with known dependencies is populated by: determining for one or more of the applications with known dependencies a second application that is dependent on the one or more of the applications with known dependencies; and recording, in a respective application profile in the first set of application profiles, the second application as a dependent application for the one or more of the applications with known dependencies.
37. The method of any one of the preceding embodiments, wherein the second set of application profiles corresponding to applications with virtual dependencies is populated by: determining a known application has unknown dependencies; in response to determining that known application has unknown dependencies, determining a type of the known application; determining one or more of the applications with known dependencies that corresponds to the type; determining a virtual dependency for the known application based on a known dependency of the one or more of the applications with known dependencies that corresponds to the type; and recording, in a respective application profile in the second set of application profiles, the virtual dependency for the known application.
38. The method of any one of the preceding embodiments, wherein the second set of application profiles corresponding to applications with virtual dependencies is populated by: determining a known application has unknown dependencies; in response to determining that known application has unknown dependencies, determining a function performed by the known application; determining one or more of the applications with known dependencies that perform the function; determining a virtual dependency for the known application based on a known dependency of the one or more of the applications with known dependencies that perform the function; and recording, in a respective application profile in the second set of application profiles, the virtual dependency for the known application.
39. The method of any one of the preceding embodiments, wherein the application profile repository is generating by: determining an application mapping for a first application subset, wherein the application mapping indicates relationships between a plurality of applications in the first application subset; and populating an application profile repository based on the application mapping.
40. The method of any one of the preceding embodiments, wherein the application profile repository is based on an application mapping, wherein each of the plurality of applications is represented by respective nodes in the application mapping, wherein the respective nodes comprise a first node subset and a second node subset, wherein the first node subset comprises nodes with respective known dependencies, wherein the second node subset comprises nodes with respective virtual dependencies, and wherein the respective virtual dependencies are inferred based on relationships between the plurality of applications and the respective known dependencies.
41. The method of any one of the preceding embodiments, wherein determining, based on inputting the first usage metric into the first model, the first output further comprises: determining a second usage metric for a second device; determining a usage profile based on the first usage metric and the second usage metric; and matching the usage profile to the first application based on a first application profile for the first application.
42. The method of any one of the preceding embodiments, further comprising: determining, based on the first output, a first portion of the first usage metric corresponding to the first application; determining, based on the first output, a second portion of a second usage metric for a second device; and determining a power consumption prediction based on the first portion and the second portion.
43. The method of any one of the preceding embodiments, further comprising: determining respective power consumption predictions for each device on the first application-specific device usage list; and determining a composite power consumption prediction based on aggregating each of the respective power consumption predictions.
44. The method of any one of the preceding embodiments, further comprising: comparing the composite power consumption prediction to a threshold composite power consumption prediction; and determining to use one or more devices on the first application-specific device usage list based on comparing the composite power consumption prediction to the threshold composite power consumption prediction.
45. The method of any one of the preceding embodiments, further comprising: determining a first usage metric for a first device, wherein the first usage metric describes first metadata related to a first process performed by the first device when servicing one or more of a plurality of applications; determining a second usage metric for a second device, wherein the second usage metric describes second metadata related to a second process performed by the second device when servicing the one or more of the plurality of applications; retrieving, from an application profile repository, a first subset of application profiles corresponding to applications in a first application subset, wherein the application profile repository comprises a first set of application profiles corresponding to applications with known dependencies and a second set of application profiles corresponding to applications with virtual dependencies; determining, based on inputting the first usage metric and the second usage metric into a first model, a first output, wherein the first model is trained to determine applications being serviced based on comparisons of inputted usage metrics for one or more devices and the first subset of application profiles; and determining, based on the first output, a first application being serviced by the first device and the second device.
46. The method of any one of the preceding embodiments, wherein determining the first output further comprises: determining a usage profile based on the first usage metric and the second usage metric; and comparing the usage profile to a first application profile for the first application.
47. The method of any one of the preceding embodiments, wherein the first set of application profiles corresponding to applications with known dependencies is populated by: determining for one or more of the applications with known dependencies a second application that is dependent on the one or more of the applications with known dependencies; and recording, in a respective application profile in the first set of application profiles, the second application as a dependent application for the one or more of the applications with known dependencies.
48. The method of any one of the preceding embodiments, wherein the second set of application profiles corresponding to applications with virtual dependencies is populated by: determining a known application has unknown dependencies; in response to determining that known application has unknown dependencies, determining a type of the known application; determining one or more of the applications with known dependencies that corresponds to the type; and determining a virtual dependency for the known application based on a known dependency of the one or more of the applications with known dependencies that corresponds to the type; and recording, in a respective application profile in the second set of application profiles, the virtual dependency for the known application.
49. The method of any one of the preceding embodiments, wherein the second set of application profiles corresponding to applications with virtual dependencies is populated by: determining a known application has unknown dependencies; in response to determining that known application has unknown dependencies, determining a function performed by the known application; determining one or more of the applications with known dependencies that perform the function; and determining a virtual dependency for the known application based on a known dependency of the one or more of the applications with known dependencies that perform the function; and recording, in a respective application profile in the second set of application profiles, the virtual dependency for the known application.
50. The method of any one of the preceding embodiments, wherein the application profile repository is generating by: determining an application mapping for a first application subset, wherein the application mapping indicates relationships between a plurality of applications in the first application subset; and populating an application profile repository based on the application mapping.
51. The method of any one of the preceding embodiments, wherein the application profile repository is based on an application mapping, wherein each of the plurality of applications is represented by respective nodes in the application mapping, wherein the respective nodes comprise a first node subset and a second node subset, wherein the first node subset comprises nodes with respective known dependencies, wherein the respective known dependencies, wherein the second node subset comprises nodes with respective virtual dependencies, and wherein the respective virtual dependencies are inferred based on relationships between the plurality of applications and the respective known dependencies.
52. The method of any one of the preceding embodiments, wherein the operations further comprise: determining respective power consumption predictions for each device servicing the first application; and determining a composite power consumption prediction based on aggregating each of the respective power consumption predictions.
53. The method of any one of the preceding embodiments, wherein the operations further comprise: comparing the composite power consumption prediction to a threshold composite power consumption prediction; and determining to use one or more devices for servicing the first application based on comparing the composite power consumption prediction to the threshold composite power consumption prediction.
54. A non-transitory, machine-readable medium storing instructions that, when executed by a data processing apparatus, cause the data processing apparatus to perform operations comprising those of any of embodiments 1-53.
55. A system comprising one or more processors; and memory storing instructions that, when executed by the processors, cause the processors to effectuate operations comprising those of any of embodiments 1-53.
55. A system comprising means for performing any of embodiments 1-53.

## Claims

1. A system for providing application-level insights for devices or network arrangements comprising applications with unknown dependencies on other applications, the system comprising:
one or more processors; and
one or more non-transitory, computer-readable mediums comprising instructions recorded thereon that when executed by the one or more processors cause operations comprising:
generating an application mapping for an application subset, wherein the application mapping indicates relationships between or among a plurality of applications in the application subset, and wherein each of the plurality of applications is represented by respective nodes in the application mapping, wherein each of the respective nodes comprises a first node subset and a second node subset, wherein the first node subset comprises nodes with respective known dependencies on other applications of the plurality of applications, wherein the second node subset comprises nodes with respective virtual dependencies on other applications of the plurality of applications, and wherein the respective virtual dependencies are inferred based on both the relationships between or among the plurality of applications and the respective known dependencies;
populating an application profile repository with a plurality of application profiles of the plurality of applications based on the application mapping;
receiving a first user request to generate a first application-specific device usage list for a first application of the plurality of applications;
determining a first usage metric for a first device, wherein the first usage metric describes metadata related to one or more processes performed by the first device when servicing one or more of the plurality of applications;
retrieving, from the application profile repository, a subset of application profiles of the plurality of application profiles, the subset of application profiles corresponding to respective applications in the application subset;
determining, based on the subset of application profiles and as a result of inputting the first usage metric into a first artificial intelligence model, a first output, wherein the first artificial intelligence model is trained to generate application-specific device usage lists for the respective applications based on both inputted usage metrics for one or more devices associated with one or more of the respective applications and respective application profiles of the plurality of application profiles associated with the one or more of the respective applications; and
generating, for display on a user interface, the first application-specific device usage list based on the first output.

2. A method for providing application-level insights for devices or network arrangements comprising applications with unknown dependencies on other applications, the method comprising:
receiving a first user request to generate a first application-specific device usage list for a first application of a plurality of applications;
determining a first usage metric for a first device, wherein the first usage metric describes metadata related to one or more processes performed by the first device when servicing one or more of the plurality of applications;
retrieving, from an application profile repository, a subset of application profiles of a plurality of application profiles, the subset of application profiles corresponding to respective applications of the plurality of applications, wherein the application profile repository comprises a first set of application profiles corresponding to applications of the plurality of applications with known dependencies and a second set of application profiles corresponding to applications of the plurality of applications with virtual dependencies;
determining, based on the subset of application profiles and as a result of inputting the first usage metric into a first model, a first output, wherein the first model is trained to generate application-specific device usage lists for the respective applications based on both inputted usage metrics for one or more devices associated with one or more of the respective applications and respective application profiles of the plurality of application profiles associated with the one or more of the respective applications; and
generating, for display on a user interface, the first application-specific device usage list based on the first output.

3. The method of claim 2, wherein the first set of application profiles corresponding to applications with known dependencies is populated by:
determining for one or more of the applications with known dependencies a second application that is dependent on the one or more of the applications with known dependencies; and
recording, in a respective application profile in the first set of application profiles, the second application as a dependent application for the one or more of the applications with known dependencies.

4. The method of claim 2 or 3, wherein the second set of application profiles corresponding to applications with virtual dependencies is populated by:
(a) determining a known application has unknown dependencies; in response to determining that known application has unknown dependencies, determining a type of the known application; determining one or more of the applications with known dependencies that corresponds to the type; and determining a virtual dependency for the known application based on a known dependency of the one or more of the applications with known dependencies that corresponds to the type; recording, in a respective application profile in the second set of application profiles, the virtual dependency for the known application; or
(b) determining a known application has unknown dependencies; in response to determining that known application has unknown dependencies, determining a function performed by the known application; determining one or more of the applications with known dependencies that perform the function; determining a virtual dependency for the known application based on a known dependency of the one or more of the applications with known dependencies that perform the function; and recording, in a respective application profile in the second set of application profiles, the virtual dependency for the known application.

5. The method of any one of claims 2 to 4, wherein:
(a) the application profile repository is generated by: determining an application mapping for a first application subset, the first application subset including the plurality of applications, wherein the application mapping indicates relationships between or among the plurality of applications; and populating an application profile repository with the plurality of application profiles based on the application mapping; and/or
(b) the application profile repository is based on an application mapping, wherein each of the plurality of applications is represented by respective nodes in the application mapping, wherein the respective nodes comprise a first node subset and a second node subset, wherein the first node subset comprises nodes with respective known dependencies, wherein the second node subset comprises nodes with respective virtual dependencies, and wherein the respective virtual dependencies are inferred based on relationships between the plurality of applications and the respective known dependencies.

6. The method of any one of claims 2 to 5, wherein determining, based on inputting the first usage metric into the first model, the first output further comprises:
determining a second usage metric for a second device;
determining a usage profile based on the first usage metric and the second usage metric; and
matching the usage profile to the first application based on a first application profile for the first application.

7. The method of any one of claims 2 to 6, further comprising:
determining, based on the first output, a first portion of the first usage metric corresponding to the first application;
determining, based on the first output, a second portion of a second usage metric for a second device; and
determining a power consumption prediction based on the first portion and the second portion.

8. The method of any one of claims 2 to 7, further comprising:
determining respective power consumption predictions for each device on the first application-specific device usage list; and
determining a composite power consumption prediction based on aggregating each of the respective power consumption predictions;
wherein, optionally, the method further comprises: comparing the composite power consumption prediction to a threshold composite power consumption prediction; and determining to use one or more devices on the first application-specific device usage list based on comparing the composite power consumption prediction to the threshold composite power consumption prediction.

9. The method of any one of claims 2 to 8, further comprising:
(a) determining, based on the first application-specific device usage list, a first device for processing the first application; and generating a recommendation for using the first device for processing the first application; and/or
(b) determining, based on the first application-specific device usage list, a first device or a second device for processing the first application; determining a first usage metric processing the first application with the first device; determining a second usage metric processing the first application with the second device; and generating a recommendation for using the first device based on comparing the first usage metric and the second usage metric.

10. The method of any one of claims 2 to 9, further comprising:
(a) determining, based on the first application-specific device usage list, a first device currently being used to process the first application; and generating a recommendation to switch from the first device to a second device; and/or
(b) determining, based on the first application-specific device usage list, a first device for processing the first application; determining a first usage metric processing the first application with the first device; and comparing the first usage metric to a threshold metric.

11. One or more non-transitory, computer-readable mediums comprising instructions recorded thereon that when executed by one or more processors cause operations comprising:
determining a first usage metric for a first device, wherein the first usage metric describes first metadata related to a first process performed by the first device when servicing one or more of a plurality of applications;
determining a second usage metric for a second device, wherein the second usage metric describes second metadata related to a second process performed by the second device when servicing the one or more of the plurality of applications;
retrieving, from an application profile repository, a subset of application profiles of a plurality of application profiles, the subset of application profiles corresponding to respective applications of the plurality of applications, wherein the application profile repository comprises a first set of application profiles corresponding to applications with known dependencies and a second set of application profiles corresponding to applications with virtual dependencies;
determining, based on inputting the first usage metric and the second usage metric into a first model, a first output, wherein the first model is trained to determine applications being serviced based on comparisons of inputted usage metrics for one or more devices and the first subset of application profiles; and
determining, based on the first output, a first application being serviced by the first device and the second device.

12. The one or more non-transitory, computer-readable mediums of claim 11, wherein determining the first output further comprises:
determining a usage profile based on the first usage metric and the second usage metric; and
comparing the usage profile to a first application profile for the first application.

13. The one or more non-transitory, computer-readable mediums of claim 11 or 12, wherein the first set of application profiles corresponding to applications with known dependencies is populated by:
determining for one or more of the applications with known dependencies a second application that is dependent on the one or more of the applications with known dependencies; and
recording, in a respective application profile in the first set of application profiles, the second application as a dependent application for the one or more of the applications with known dependencies.

14. The one or more non-transitory, computer-readable mediums of any one of claims 11 to 13, wherein the second set of application profiles corresponding to applications with virtual dependencies is populated by:
determining a known application has unknown dependencies;
in response to determining that known application has unknown dependencies, determining a type of the known application;
determining one or more of the applications with known dependencies that corresponds to the type;
determining a virtual dependency for the known application based on a known dependency of the one or more of the applications with known dependencies that corresponds to the type; and
recording, in a respective application profile in the second set of application profiles, the virtual dependency for the known application.

15. The one or more non-transitory, computer-readable mediums of any one of claims 11 to 14, wherein the application profile repository is generated by:
determining an application mapping for a first application subset, the first application subset including the plurality of applications, wherein the application mapping indicates relationships between or among the plurality of applications; and
populating an application profile repository with the plurality of application profiles based on the application mapping.
